# FASCICULE DE BREVET EUROPEEN

(11) **EP 2 868 058 B1**
(45) Date de publication et mention de la délivrance du brevet: **08.08.2018**
(21) Numéro de dépôt: 13744647.2
(22) Date de dépôt: 27.06.2013
(51) Int. Cl.: H04L 29/06

(54) **PROCÉDÉ D'ÉMISSION D'UN MESSAGE PAR UN SERVEUR D'UN COEUR DE RÉSEAU IP MULTIMEDIA IMS, ET SERVEUR**
VERFAHREN UND SERVER ZUR EINER IP-MULTIMEDIA IMS CORE NETWORK SERVER EINE NACHRICHT SENDEN
METHOD AND SERVER FOR AN IP MULTIMEDIA IMS CORE NETWORK SERVER TO SEND A MESSAGE

(30) Priorité: 29.06.2012 FR 1256258
(43) Date de publication de la demande: 06.05.2015
(73) Titulaire: Orange, 75015 Paris (FR)
(72) Inventeur: LE ROUZIC, Jean-Claude, F-22560 Trebeurden (FR); DOREE, José, F-22300 Lannion (FR)
(74) Mandataire: Fontenelle, Sandrine
(86) Numéro de dépôt international: PCT/FR2013/051504
(87) Numéro de publication internationale: WO 2014/001724

(56) Documents cités:
- CN-B- 101 043 744
- YAN JUN ET AL: "Some comments and Proposal on IMS authentication bundled with NASS", INTERNET CITATION, 11 juillet 2005 (2005-07-11), XP007904661, Extrait de l'Internet: URL:http://portal.etsi.org/docbox/TISPAN/O pen/Archives/Joint_meetings/2005-07_3GPP_T ISPAN_Sophia/CT1-WG3/ [extrait le 2008-05-05]
- TIINA KOSKINEN ET AL: "IMS-NASS bundled authentication", INTERNET CITATION, 5 septembre 2005 (2005-09-05), XP007904662, Extrait de l'Internet: URL:ftp://ftp.3gpp.org/TSG_SA/WG3_Security /TSGS3_40_Slovenia/Docs/S3-050548.zip [extrait le 2008-05-05]
- "TISPAN NGN Security Subpart 3 â Security Architecture", ETSI DRAFT; 07012-3-NGN-R1V009, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.0.9, 21 juin 2005 (2005-06-21), pages 1-72, XP014054305,

## Description

### Arrière-plan de l'invention

L'invention se rapporte au domaine général des télécommunications, et plus particulièrement au domaine des architectures de réseau IP (Internet Protocol) multimédia, telles que notamment des architectures de réseau utilisant la technologie désignée par "voix sur IP" (ou VoIP pour Voice over IP).

Elle a une application privilégiée mais non limitative dans le contexte de coeurs de réseau IP multimédia s'appuyant sur une architecture IMS (IP Multimedia Subsystem), telle que proposée par le standard 3GPP (Third Generation Partnership Project), et mettant en oeuvre le protocole d'initiation de sessions multimédia SIP (Session Initiation Protocol). Le protocole SIP, défini par le standard IETF (Internet Engineering Task Force), est décrit en détail dans le document RFC 3261 intitulé « SIP: Session Initiation Protocol », Juin 2002, édité par l'IETF.

L'invention peut toutefois être utilisée en association avec d'autres architectures de coeurs de réseau IP multimédia, telles que par exemple des architectures propriétaires, mettant en oeuvre ou non le protocole SIP pour l'établissement de sessions multimédia (voix, texte, vidéo, données, etc.).

L'invention concerne plus précisément la sécurisation des communications entre un terminal et un coeur de réseau IP multimédia.

Les opérateurs téléphoniques ont aujourd'hui débuté la migration de leurs réseaux téléphoniques à commutation de circuits vers des réseaux de voix sur IP à commutation de paquets, tels que par exemple des réseaux VoIP s'appuyant sur une architecture IMS.

Dans ces réseaux VoIP, un terminal peut être connecté et enregistré auprès du coeur de réseau IMS par le biais de plusieurs réseaux d'accès, comme notamment par l'intermédiaire d'un réseau d'accès 3GPP, xDSL (x Digital Subscriber Line), EPC (Evolved Packet Core), WLAN (Wireless Local Area Network), câble, WiMAX (Worldwide interoperability for Microwave Access) ou CDMA2000 (Code Division Multiple Access 2000).

Le standard 3GPP, dans sa définition actuelle, prévoit la possibilité d'établir un lien sécurisé entre un terminal et son serveur de raccordement au coeur de réseau IMS, autrement dit, entre le terminal et le serveur P-CSCF (Proxy-Call Session Control Function) qui lui est associé. Ce lien sécurisé, aussi connu sous le nom de « tunnel sécurisé » ou « d'association de sécurité » (« *security association* » en anglais), se traduit par l'encryptage (i.e. le chiffrement) des données véhiculées entre le terminal et le serveur P-CSCF, et le contrôle de l'intégrité de ces données. Comme décrit dans les spécifications RFC 3329 et TS 33.203 du 3GPP, les paramètres de ce lien sécurisé (protocole de sécurisation utilisé, algorithmes de chiffrement ou de signature, numéros de ports utilisés, etc.) sont échangés entre le terminal et le serveur P-CSCF lors de l'enregistrement du terminal auprès du coeur de réseau IMS. Une fois ce lien sécurisé établi, il existe une association de sécurité entre le terminal et le serveur P-CSCF qui offre une garantie contre l'espionnage des données émises ou reçues par le terminal.

Plus précisément, lorsqu'un terminal propose une méthode d'authentification comprenant l'établissement d'un tunnel sécurisé, il émet une requête d'enregistrement comprenant un « header » (champ dans la requête d'enregistrement) appelé « Authorization », ainsi qu'un header « security-client » contenant :
- soit la valeur « ipsec-3gpp », associée au protocole IPsec (Internet Protocol security) (cf. la Section 5.1.1.2.2 de la spécification TS 24.229),
- soit la valeur « tls », associée au protocole TLS (Transport Layer Security) (cf. la Section 5.1.1.2.4 de la spécification TS 24.229),
qui sont les deux mécanismes de tunnel sécurisé prévus par le 3GPP (cf. l'Annexe H de la spécification TS 33.203). Le protocole IPsec est associé à la méthode d'authentification dite « IMS AKA », et le protocole TLS est associé à la méthode d'authentification dite « SIP digest with TLS ».

Or l'établissement et le maintien d'un tel tunnel sécurisé est relativement coûteux en termes de ressources, tant au niveau des terminaux qu'au niveau des serveurs P-CSCF. Les algorithmes de chiffrement consomment en effet beaucoup de ressources CPU (Central Processing Unit), ce qui a un impact sur la durée de vie des batteries des terminaux mobiles, et nécessite de dimensionner en conséquence les serveurs P-CSCF.

L'impact sur les ressources des terminaux mobiles est en outre accentué par le fait que le tunnel sécurisé prévu par le standard 3GPP vient se superposer aux procédures de chiffrement déjà mises en oeuvre par certains réseaux d'accès mobiles, telles que les procédures de chiffrement prévues pour protéger les informations transmises par les terminaux mobiles vers les noeuds SGSN (Serving GPRS Support Node) pour le plan de contrôle et BTS (Base Transceiver Station) ou Node B pour le plan usager des réseaux GERAN (GSM EDGE Radio Access Network) et UTRAN (UMTS Terrestrial Radio Access Network), ou vers les entités MME (Mobility Management Entity) pour le plan de contrôle et e-NodeB pour le plan usager des réseaux LTE (Long Term Evolution).

En d'autres mots, pour ces réseaux d'accès, les données échangées entre le terminal et le coeur de réseau IP multimédia sont chiffrées une première fois par les procédures de chiffrement mises en place par les réseaux d'accès, puis les données chiffrées obtenues sont chiffrées une seconde fois dans le tunnel sécurisé établi entre le terminal et le coeur de réseau IP multimédia.

Il convient de noter d'autre part, qu'un même terminal sera amené à établir plusieurs canaux de communication sur le plan usager en fonction des services utilisés (Internet, Voix sur LTE,...), et pour chacun d'entre eux, un tunnel sécurisé pourrait être installé entre le terminal et le réseau d'accès.

Ce multiple chiffrement des données, s'il garantit une protection maximale des données émises ou reçues par les terminaux, réduit également considérablement l'autonomie des terminaux.

### Objet et résumé de l'invention

L'invention permet de pallier notamment à cet inconvénient en proposant un procédé d'émission d'un message par un serveur d'un coeur de réseau IP multimédia suite à la réception par ledit serveur d'une requête d'enregistrement d'un terminal auprès du coeur de réseau, ladite requête d'enregistrement proposant une méthode d'authentification prévoyant (ou de façon équivalente, requérant) l'établissement d'un tunnel sécurisé entre le terminal et une entité de raccordement de ce terminal au coeur de réseau, ledit procédé d'émission comprenant :
- une étape d'identification d'un réseau d'accès utilisé par le terminal pour s'enregistrer auprès du coeur de réseau ;
- une étape d'élaboration, en fonction du réseau d'accès identifié, d'une recommandation quant à l'établissement ou non du tunnel sécurisé entre le terminal et l'entité de raccordement pour ladite méthode d'authentification ; et
- une étape d'insertion de cette recommandation dans le message émis par le serveur.

Corrélativement, l'invention vise également un serveur d'un coeur de réseau IP multimédia, ce serveur comprenant des moyens activés suite à la réception par le serveur d'une requête d'enregistrement d'un terminal auprès du coeur de réseau, ladite requête d'enregistrement proposant une méthode d'authentification prévoyant l'établissement d'un tunnel sécurisé entre le terminal et une entité de raccordement de ce terminal au coeur de réseau, ces moyens comprenant :
- des moyens d'identification d'un réseau d'accès utilisé par le terminal pour s'enregistrer auprès du coeur de réseau ;
- des moyens d'élaboration, en fonction du réseau d'accès identifié, d'une recommandation quant à l'établissement ou non du tunnel sécurisé entre le terminal et l'entité de raccordement pour ladite méthode d'authentification ;
- des moyens d'insertion de cette recommandation dans un message ; et
- des moyens d'émission de ce message.

On notera que ladite méthode d'authentification proposée par le terminal peut être indiquée de manière explicite, mais (comme expliqué plus bas) elle sera préférablement, en l'état actuel des normes 3GPP, indiquée de manière implicite.

Ainsi, l'invention propose de conditionner l'établissement du tunnel sécurisé entre le terminal et le coeur de réseau IP multimédia en fonction au moins du réseau d'accès utilisé par le terminal pour s'enregistrer auprès du coeur de réseau. Notamment, on peut prendre en compte pour élaborer cette recommandation le type du réseau d'accès utilisé par le terminal (ex. réseau UMTS, réseau WiFi, etc.), mais également d'autres paramètres liés à ce réseau d'accès comme, par exemple, l'existence d'accords d'itinérance sécurisés avec ce réseau d'accès, le fait que le réseau d'accès utilisé par le terminal pour s'enregistrer auprès du coeur de réseau est un réseau d'accès visité (situation de *roaming* international), ou encore le fait que le réseau d'accès utilisé par le terminal se situe ou non dans le réseau nominal (réseau *home*) du serveur établissant la recommandation, etc.

Il convient de noter qu'au sens de l'invention, un réseau d'accès peut comprendre un ou plusieurs (sous-)réseaux d'accès.

Ce conditionnement est exprimé, conformément à l'invention, sous la forme d'une recommandation d'établir ou non le tunnel sécurisé, émise par un serveur du coeur de réseau IP multimédia lors de l'enregistrement du terminal (c'est-à-dire finalement, lorsque l'établissement du tunnel sécurisé est requis par le terminal).

La recommandation est élaborée par le serveur, en fonction du réseau d'accès identifié, en prenant en compte préférentiellement un niveau de sécurisation des données associé (ou attribué) par le coeur de réseau IP multimédia au réseau d'accès utilisé par le terminal.

Ce niveau de sécurisation peut dépendre de plusieurs facteurs, comme par exemple du type du réseau d'accès (ex. accès 3GPP, accès WiFi (Wireless Fidelity), etc.), de l'existence de procédures de sécurisation fortes mises en oeuvre sur ce réseau, de la mise en place d'accords d'itinérance sécurisés par le coeur de réseau avec ce réseau d'accès, etc. Il reflète la confiance qu'a le coeur de réseau IP multimédia (i.e. l'opérateur du coeur de réseau IP multimédia) dans la sécurisation des échanges de données assuré par le réseau d'accès. Ainsi, un coeur de réseau IP multimédia peut associer à un réseau d'accès un niveau de sécurisation faible en dépit des algorithmes de chiffrement mis en oeuvre par ce réseau d'accès, par exemple parce que ce réseau d'accès est associé à une zone géographique sensible, etc.

Cette recommandation permet ainsi au serveur d'indiquer un degré de nécessité (ou d'obligation) d'établir le tunnel sécurisé normalement prévu par le coeur de réseau entre le terminal et l'entité de raccordement, compte tenu du niveau de sécurisation garanti par le réseau d'accès selon le coeur de réseau IP multimédia.

Elle a bien entendu vocation à être transmise au terminal et/ou à l'entité de raccordement pour être exécutée lors de l'enregistrement du terminal.

La recommandation émise par le serveur comprend préférentiellement l'une des indications suivantes :
- une indication de ne pas établir le tunnel sécurisé entre le terminal et l'entité de raccordement, par exemple parce que le coeur de réseau IP considère que le réseau d'accès utilisé par le terminal comprend des procédures de chiffrement suffisamment fortes et fiables pour garantir la protection et l'intégrité des données transmises ou reçues par le terminal ;
- une indication de libre choix quant à l'établissement du tunnel sécurisé entre le terminal et l'entité de raccordement ;
- une indication d'établir le tunnel sécurisé entre le terminal et l'entité de raccordement, par exemple parce que le réseau d'accès utilisé par le terminal n'est pas considéré comme suffisamment sécurisé au vu de certains critères prédéterminés (ex. absence de chiffrement des données, absence de contrôle de l'intégrité des données, etc.).

Ainsi, par exemple, si la requête d'enregistrement du terminal est reçue via un réseau d'accès 3GPP (autrement dit, via un réseau d'accès radio sécurisé de par la définition de la norme 3GPP), qui est par ailleurs identifié comme étant le réseau d'accès nominal du terminal ou un réseau d'accès avec lequel un accord d'itinérance fort est conclu, le serveur peut préconiser, dans sa recommandation, de ne pas établir le tunnel sécurisé entre le terminal et l'entité de raccordement, ou en variante, laisser libre choix dans cette recommandation au terminal d'établir ou non ce tunnel sécurisé.

Au contraire, si le terminal tente de s'enregistrer via un réseau d'accès fixe depuis un hot spot WiFi public non sécurisé, le serveur peut alors préconiser dans sa recommandation d'établir le tunnel sécurisé entre le terminal et l'entité de raccordement.

La recommandation du serveur peut être élaborée par le serveur en comparant des caractéristiques et/ou le type du réseau d'accès utilisé par le terminal par rapport à des critères de sécurisation prédéterminés, pour déterminer si le niveau de sécurisation assuré par le réseau d'accès est suffisant pour relâcher la contrainte d'établissement du tunnel sécurisé entre le terminal et l'entité de raccordement.

Dans une variante de réalisation privilégiée et relativement simple, la recommandation du serveur est élaborée en consultant une table ou une base de données préétablie, dans laquelle on associe à différents réseaux d'accès, une recommandation sur la nécessité (ou l'obligation) ou non d'établir le tunnel de sécurité entre le terminal et l'entité de raccordement.

Cette table peut être renseignée par l'opérateur du coeur de réseau IP multimédia en fonction du niveau de sécurisation des échanges qu'il associe aux différents réseaux d'accès : ce niveau de sécurisation peut être établi par l'opérateur du coeur de réseau, comme mentionné précédemment, en tenant compte notamment de la connaissance *a priori* des procédures de sécurité (chiffrement, contrôle de l'intégrité, etc.) mises en oeuvre sur ces différents réseaux d'accès (ex. en fonction du type de réseau d'accès et/ou de l'opérateur de ces réseaux, de la définition des standards respectés par ces réseaux d'accès), de l'existence ou non d'accords d'itinérance « forts » (fiables) avec les réseaux d'accès, voire de l'absence d'informations suffisantes sur un réseau d'accès, etc.

La recommandation émise par le serveur du coeur de réseau IP multimédia offre ainsi la possibilité de s'affranchir de l'établissement d'un lien (tunnel) sécurisé entre le terminal et l'entité de raccordement quand une protection forte des données et de leur intégrité est déjà assurée par le réseau d'accès utilisé par le terminal.

On économise par ce biais des ressources à la fois au niveau du terminal (la durée de vie de la batterie est préservée) et au niveau de l'entité de raccordement.

En variante, on peut ne prévoir que deux types de recommandation possibles émis par le serveur, à savoir, une indication de ne pas établir le tunnel sécurisé ou une indication d'établir le tunnel sécurisé, de sorte à être plus directif. Cette variante permet d'économiser davantage de ressources au niveau du terminal et de l'entité de raccordement.

L'invention a donc une application privilégiée mais non limitative lorsque le coeur de réseau IP multimédia implémente une architecture IMS, dans lequel l'établissement d'un tunnel sécurisé lors de l'enregistrement d'un terminal est prévu conformément au standard 3GPP. De manière plus générale, elle s'applique à tout coeur de réseau IP multimédia prévoyant l'établissement d'un tunnel sécurisé entre le terminal et le coeur de réseau à l'accès (lors de l'enregistrement du terminal auprès du coeur de réseau).

Dans un contexte IMS, le serveur du coeur de réseau IP multimédia émettant la recommandation peut être un serveur S-CSCF, et le message dans lequel est insérée la recommandation est alors émis par le serveur S-CSCF à destination du terminal via un serveur P-CSCF raccordant le terminal au coeur de réseau IP multimédia.

Il convient de noter que la recommandation élaborée par le serveur S-CSCF est préférentiellement insérée dans un message de réponse intermédiaire à la requête d'enregistrement du terminal tel un message SIP 401 Unauthorized, émis par le serveur S-CSCF à destination du terminal, conformément au protocole SIP.

Le serveur P-CSCF peut alors, propager cette recommandation au terminal pour inhiber ou au contraire déclencher l'établissement du tunnel sécurisé entre le terminal et le serveur P-CSCF.

Un même serveur S-CSCF pouvant être en relation avec plusieurs serveurs P-CSCF, cette variante présente l'avantage de limiter la complexité liée à la mise en oeuvre de l'invention et donc d'optimiser l'exploitation du coeur de réseau (notamment, une seule table préétablie a besoin d'être mémorisée au niveau du serveur S-CSCF pour émettre des recommandations relatives à plusieurs entités de raccordement).

Par ailleurs, cette variante offre la possibilité de prendre en compte facilement, pour élaborer la recommandation (ou la pondérer), des informations contenues dans le profil de l'utilisateur du terminal. Ainsi par exemple, on peut envisager d'associer dans le profil de l'utilisateur du terminal, une indication selon laquelle pour cet utilisateur, un tunnel sécurisé doit toujours être établi, indépendamment du niveau de sécurisation associé au réseau d'accès utilisé par le terminal pour s'enregistrer.

En variante, le serveur du coeur de réseau IP multimédia émettant la recommandation peut être un serveur P-CSCF, et le message dans lequel est insérée la recommandation est alors émis vers le terminal.

La recommandation élaborée par le serveur P-CSCF est préférentiellement insérée dans un message de réponse intermédiaire à la requête d'enregistrement du terminal tel un message SIP 401 Unauthorized émis par le serveur S-CSCF à destination du terminal et qui transite par le serveur P-CSCF, conformément au protocole SIP.

Autrement dit, le serveur émettant la recommandation peut être l'entité de raccordement elle-même du terminal au coeur de réseau IP multimédia. Cette variante permet d'avoir une gestion plus locale de l'établissement du tunnel sécurisé et de prendre en compte plus facilement des spécificités locales de l'accès au coeur de réseau (ex. présence de certains réseaux d'accès (ex. WiFi) dans une localisation particulière).

Dans une autre variante encore, une recommandation est élaborée conformément à l'invention à la fois par un serveur S-CSCF et par un serveur P-CSCF du coeur de réseau IP multimédia. Dans cette variante de réalisation, si les recommandations élaborées respectivement par le serveur S-CSCF et par le serveur P-CSCF sont différentes, seule la recommandation émise par le serveur P-CSCF est prise en compte et transmise en définitive au terminal. Autrement dit, la recommandation émise par le serveur P-CSCF vient écraser la recommandation émise par le serveur S-CSCF dans le message de réponse intermédiaire SIP 401 Unauthorized.

De manière plus générale, le serveur selon l'invention peut être intégré dans n'importe quelle entité du coeur de réseau apte à recevoir des requêtes d'enregistrement des terminaux contenant une demande d'établissement d'un tunnel sécurisé entre le terminal et l'entité de raccordement de ce terminal au coeur de réseau.

Dans un mode particulier de réalisation de l'invention, la recommandation est élaborée en fonction également d'au moins un paramètre reçu avec la requête d'enregistrement.

Ce paramètre peut être notamment contenu dans la requête d'enregistrement ou véhiculé dans la signalisation associée à cette requête d'enregistrement.

Ce mode de réalisation permet, pour un même réseau d'accès ou pour un même type de réseau d'accès, de pondérer le conditionnement en fonction du réseau d'accès mis en oeuvre par le serveur, par l'intermédiaire du paramètre contenu dans la requête d'enregistrement.

Ce paramètre peut être notamment une adresse IP de transport de la requête d'enregistrement, c'est-à-dire l'adresse source de la requête d'enregistrement du terminal telle que reçue par le serveur. De façon connue de l'homme du métier, cette adresse source peut, selon les configurations de réseau envisagées, correspondre à l'adresse de contact ou à l'adresse IP du terminal cherchant à s'enregistrer (ex. pour un réseau d'accès mobile), ou à l'adresse IP d'une entité intermédiaire entre le terminal et le serveur (ex. passerelle domestique).

Ainsi, à titre d'exemple, pour un même réseau d'accès, on pourra avantageusement décider d'émettre une recommandation ferme de ne pas établir de tunnel sécurisé pour un certain intervalle d'adresses IP tandis qu'un libre choix sera laissé pour un autre intervalle d'adresses IP ou une sélection d'adresses IP.

En variante, ce paramètre peut être un identifiant associé à l'utilisateur du terminal, tel qu'un identifiant IMSI (International Mobile Subscriber Identity) ou MSISDN (Mobile Station Integrated Services Digital Network).

De cette sorte, par exemple, pour un même réseau d'accès, on peut décider d'émettre de façon générale une recommandation de ne pas établir de tunnel sécurisé, sauf pour certains utilisateurs identifiés au préalable (par exemple en insérant dans le profil de ces utilisateurs un indicateur approprié), pour lesquels une recommandation d'établir un tunnel sécurisé sera toujours émise au contraire.

Plus généralement, la prise en compte d'un paramètre tel qu'un identifiant associé à l'utilisateur du terminal permet de pondérer la recommandation élaborée par rapport au réseau d'accès utilisé par le terminal, en fonction d'informations associées à cet identifiant et présentes notamment dans le profil de l'utilisateur. Ces informations comprennent par exemple les services auxquels a souscrit l'utilisateur, ses préférences, son appartenance à une catégorie d'abonnés sensibles pour lesquels un lien sécurisé doit toujours être mis en oeuvre, etc.

Dans un mode particulier de réalisation de l'invention, le message émis est conforme au protocole SIP, et la recommandation du serveur est insérée dans un champ « Security Server » de ce message.

Ce mode de réalisation permet de s'interfacer aisément avec le standard SIP existant, moyennant l'ajout d'un paramètre idoine dans le champ « Security Server » défini par le standard 3GPP dans l'annexe H du document de spécification TS 33.203, pour informer le terminal ou l'entité de raccordement que la mise en oeuvre d'un tunnel sécurisé doit (ou peut) ou non avoir lieu.

Dans un mode particulier de réalisation, le message émis par le serveur contient en outre des informations permettant l'établissement du tunnel sécurisé entre le terminal et l'entité de raccordement.

Ce mode de réalisation est compatible avec les terminaux qui ne sont pas capables d'interpréter et/ou d'exécuter la recommandation émise par le serveur. Un tel terminal pourra ainsi, quel que soit l'avis émis par le serveur et la sécurisation assurée par le réseau d'accès, établir un lien sécurisé à partir des informations contenues dans le message, de sorte à garantir la protection et l'intégrité des données échangées avec le coeur de réseau.

Par ailleurs, ces informations peuvent également être utilisées lorsque la recommandation émise par le serveur laisse un libre choix quant à l'établissement ou non du tunnel sécurisé.

Il convient de noter que l'efficacité de l'invention à réduire la complexité et le surcoût en matière de ressources résultant de l'existence d'un double chiffrement des données repose d'une part, sur le serveur qui émet la recommandation quant à l'établissement ou non du tunnel sécurisé en fonction du réseau d'accès utilisé par le terminal, et d'autre part, sur le terminal lui-même, dès lors que celui-ci est apte à exécuter la recommandation émise par le serveur lors de son enregistrement auprès du coeur de réseau.

Ainsi, selon un autre aspect, l'invention vise également un procédé d'enregistrement d'un terminal auprès d'un coeur de réseau IP, ce procédé comprenant :
- une étape d'émission, par le terminal, d'une requête d'enregistrement auprès du coeur de réseau, via un réseau d'accès, ladite requête d'enregistrement proposant une méthode d'authentification prévoyant l'établissement d'un tunnel sécurisé entre le terminal et une entité de raccordement de ce terminal au coeur de réseau ;
- une étape de réception, par le terminal, en provenance du coeur de réseau, d'une recommandation quant à l'établissement ou non du tunnel sécurisé entre le terminal et l'entité de raccordement pour ladite méthode d'authentification, cette recommandation provenant d'un message émis par un serveur du coeur de réseau conformément à un procédé d'émission selon l'invention, exécuté suite à la réception de la requête d'enregistrement du terminal ; et
- une étape d'interprétation de cette recommandation par le terminal.

Corrélativement, l'invention vise aussi un terminal comprenant :
- des moyens d'émission d'une requête d'enregistrement auprès d'un coeur de réseau IP multimédia via un réseau d'accès, ladite requête d'enregistrement proposant une méthode d'authentification prévoyant l'établissement d'un tunnel sécurisé entre le terminal et une entité de raccordement de ce terminal au coeur de réseau ;
- des moyens de réception, en provenance du coeur de réseau, d'une recommandation quant à l'établissement ou non du tunnel sécurisé entre le terminal et l'entité de raccordement pour ladite méthode d'authentification, cette recommandation provenant d'un message émis par un serveur du coeur de réseau conforme à l'invention, suite à la réception de la requête d'enregistrement ; et
- des moyens d'interprétation de cette recommandation.

Le procédé d'enregistrement et le terminal bénéficient des mêmes avantages que ceux cités précédemment pour le procédé d'émission d'un message et le serveur.

L'invention vise aussi une entité de raccordement d'un terminal à un coeur de réseau IP multimédia, cette entité de raccordement comprenant :
- des moyens de réception d'une requête d'enregistrement du terminal auprès du coeur de réseau, via un réseau d'accès, ladite requête d'enregistrement proposant une méthode d'authentification prévoyant l'établissement d'un tunnel sécurisé entre ledit terminal et ladite entité de raccordement ;
- des moyens de transmission de ladite requête d'enregistrement à un serveur conforme à l'invention ;
- des moyens de réception, en provenance du serveur, d'un message contenant une recommandation quant à l'établissement ou non du tunnel sécurisé entre le terminal et l'entité de raccordement pour ladite méthode d'authentification ; et
- des moyens de transmission de cette recommandation au terminal.

Corrélativement, l'invention vise aussi un procédé de transmission destiné à être mis en oeuvre par une entité de raccordement d'un terminal à un coeur de réseau IP multimédia, ce procédé de transmission comprenant :
- une étape de réception d'une requête d'enregistrement du terminal auprès du coeur de réseau, via un réseau d'accès, ladite requête d'enregistrement proposant une méthode d'authentification prévoyant l'établissement d'un tunnel sécurisé entre ledit terminal et ladite entité de raccordement ;
- une étape de transmission de cette requête d'enregistrement à un serveur du coeur de réseau ;
- une étape de réception, en provenance du serveur, d'un message contenant une recommandation quant à l'établissement ou non du tunnel sécurisé entre le terminal et l'entité de raccordement pour ladite méthode d'authentification, le message résultant de l'exécution par le serveur d'un procédé d'émission d'un message conforme à l'invention ; et
- une étape de transmission de cette recommandation au terminal.

L'entité de raccordement relaie ainsi la recommandation émise par le serveur du coeur de réseau IP multimédia jusqu'au terminal afin que celui-ci applique cette recommandation. Il convient de noter qu'aucune limitation n'est attachée à la façon dont la recommandation est transmise à proprement parler au terminal, i.e. l'entité de raccordement peut juste inclure en l'état la recommandation dans un message envoyé au terminal (ex. dans un paramètre du champ Security Server d'un message SIP), ou au contraire modifier la forme à proprement parler de cette recommandation, par exemple en n'envoyant pas les informations nécessaires à l'établissement du tunnel si la recommandation émise par le serveur est de ne pas établir le tunnel entre le terminal et l'entité de raccordement.

Dans un mode particulier de réalisation, les différentes étapes du procédé d'émission d'un message et/ou du procédé d'enregistrement et/ou du procédé de transmission sont déterminées par des instructions de programmes d'ordinateurs.

En conséquence, l'invention vise aussi un programme d'ordinateur sur un support d'informations, ce programme étant susceptible d'être mis en oeuvre dans un serveur ou plus généralement dans un ordinateur, ce programme comportant des instructions adaptées à la mise en oeuvre des étapes d'un procédé d'émission d'un message tel que décrit ci-dessus.

L'invention vise également un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé d'enregistrement tel que décrit ci-dessus.

L'invention vise aussi un programme d'ordinateur sur un support d'informations, ce programme étant susceptible d'être mis en oeuvre dans une entité de raccordement ou plus généralement dans un ordinateur, ce programme comportant des instructions adaptées à la mise en oeuvre des étapes d'un procédé de transmission tel que décrit ci-dessus.

Ces programmes peuvent utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un système de communication comprenant :
- un serveur d'un coeur de réseau IP multimédia conforme à l'invention ;
- un terminal selon l'invention, apte à s'enregistrer auprès du coeur de réseau multimédia en envoyant une requête d'enregistrement au coeur de réseau via un réseau d'accès,
- une entité de raccordement du terminal au coeur de réseau IP multimédia ;
le terminal étant apte à exécuter une recommandation élaborée par le serveur quant à l'établissement ou non d'un tunnel sécurisé entre le terminal et l'entité de raccordement du terminal au coeur de réseau.

Ainsi, le système de communication selon l'invention permet de relâcher la contrainte d'établissement du tunnel sécurisé entre le terminal et l'entité de raccordement lorsqu'un niveau de sécurisation des échanges suffisant est associé au réseau d'accès par le coeur de réseau IP multimédia. On économise par ce biais les ressources du terminal et de l'entité de raccordement.

On peut également envisager, dans d'autres modes de réalisation, que le procédé d'émission d'un message, le procédé d'enregistrement, le procédé de transmission, le serveur, le terminal, l'entité de raccordement et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins et annexes qui en illustrent des exemples de réalisation dépourvus de tout caractère limitatif :
- la figure 1 représente, de façon schématique, un système de communication, un serveur, une entité de raccordement et un terminal conformes à l'invention, dans un premier mode de réalisation ;
- les figures 2A, 2B et 2C représentent, de façon schématique, les architectures matérielles respectives du terminal, du serveur et de l'entité de raccordement de la figure 1, dans le premier mode de réalisation ;
- la figure 3 représente, sous forme d'ordinogrammes, les principales étapes d'un procédé d'enregistrement, d'un procédé de transmission et d'un procédé d'émission d'un message telles qu'elles sont mises en oeuvre respectivement par le terminal, l'entité de raccordement et le serveur de la figure 1 dans le premier mode de réalisation ;
- la figure 4 illustre une table associant à différents réseaux d'accès, une recommandation quant à l'établissement d'un lien sécurisé, et utilisée par le serveur de la figure 1 pour élaborer sa recommandation dans le premier mode de réalisation ;
- la figure 5 représente, de façon schématique, un système de communication, un serveur et un terminal conformes à l'invention, dans un second mode de réalisation ;
- la figure 6 représente schématiquement l'architecture matérielle du serveur de la figure 5 ;
- la figure 7 représente, sous forme d'ordinogrammes, les principales étapes d'un procédé d'enregistrement et d'un procédé d'émission d'un message telles qu'elles sont mises en oeuvre respectivement par le terminal et le serveur de la figure 5 dans le second mode de réalisation ;
- l'annexe 1 donne des exemples de requêtes d'enregistrement du terminal de la figure 1 et de messages contenant une recommandation émise par le serveur de la figure 1, dans le premier mode de réalisation ; et
- l'annexe 2 donne des exemples d'une requête d'enregistrement du terminal de la figure 5 et d'un message contenant une recommandation émise par le serveur de la figure 5, dans le second mode de réalisation.

### Description détaillée de l'invention

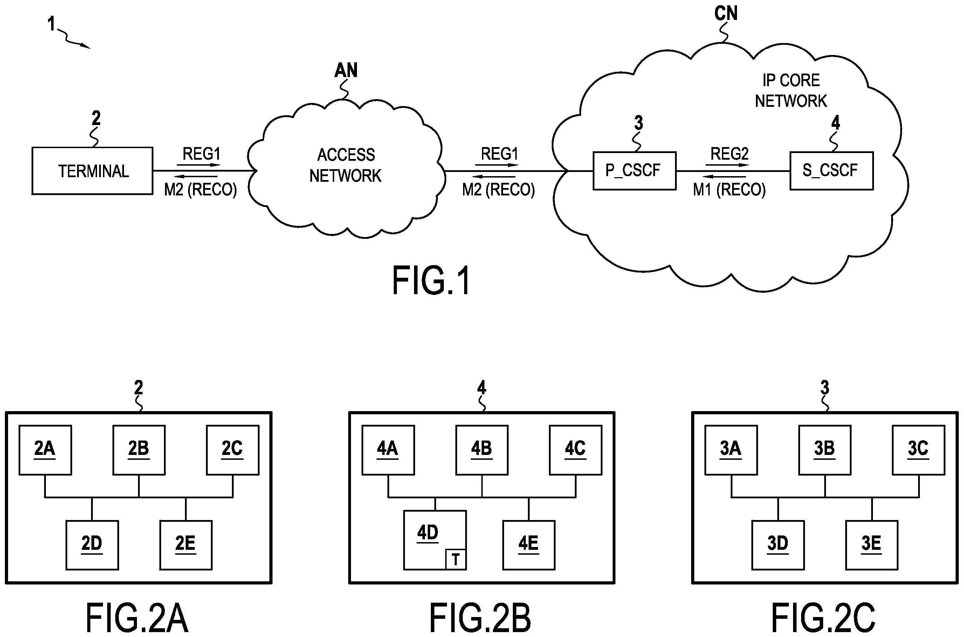

La **figure 1** représente, dans son environnement, un système 1 de communication conforme à l'invention, dans un premier mode de réalisation.

Le système 1 de communication comprend un terminal 2 conforme à l'invention, apte à s'enregistrer auprès d'un coeur CN de réseau IP multimédia via un réseau d'accès AN.

Aucune limitation n'est attachée ici à la nature du terminal 2. Il peut s'agir aussi bien d'un terminal mobile, tel un téléphone intelligent (ou smartphone), un ordinateur portable, ou un assistant numérique personnel (ou PDA pour Personal Digital Assistant), que d'un terminal fixe.

Dans le premier mode de réalisation décrit ici, le terminal 2 dispose de l'architecture matérielle d'un ordinateur, telle qu'illustrée schématiquement à la **figure 2A****.**

Il comporte un processeur 2A, une mémoire vive 2B, une mémoire morte 2C, une mémoire flash non volatile 2D, ainsi que des moyens de communication 2E mettant en oeuvre notamment le protocole SIP et lui permettant de communiquer via le réseau d'accès AN. Les moyens de communication 2E permettent au terminal 2 de communiquer notamment avec les entités du coeur de réseau CN.

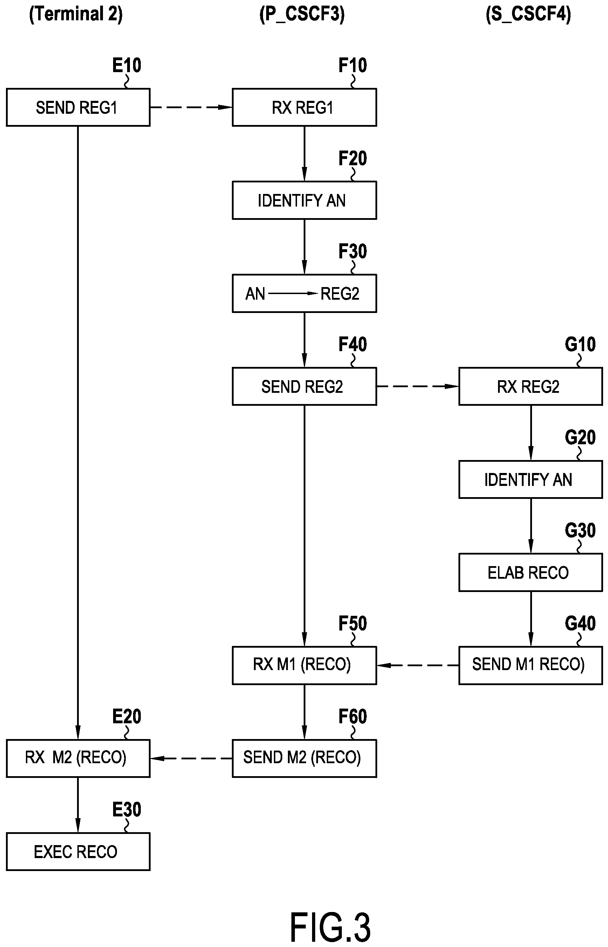

La mémoire morte 2C du terminal 2 constitue un support d'enregistrement conforme à l'invention, lisible par le processeur 2A et sur lequel est enregistré un programme d'ordinateur conforme à l'invention, comportant des instructions pour l'exécution des étapes d'un procédé d'enregistrement auprès du coeur de réseau CN conforme à l'invention, décrites ultérieurement en référence à la figure 3.

Il convient de noter qu'aucune limitation n'est attachée au réseau d'accès AN utilisé par le terminal 2 pour se connecter et s'enregistrer auprès du coeur de réseau CN, dès lors que ce réseau d'accès est connu du coeur de réseau CN. Ce réseau d'accès peut ainsi être, par exemple, un réseau d'accès 3GPP, un réseau d'accès xDSL, un réseau d'accès EPC, etc. Il peut être géré par le même opérateur que le coeur de réseau CN ou par un opérateur distinct.

Le coeur de réseau CN repose ici sur une architecture IMS, implémentant le protocole SIP, telle que décrite dans le document de spécification TS23.228 du standard 3GPP, intitulé « IP Multimedia Subsystem ; Stage 2 », Release 9, septembre 2010, disponible sur le site www.3gpp.org.

De façon connue, un coeur de réseau implémentant une architecture IMS comprend plusieurs entités fonctionnelles dont notamment, une entité CSCF (Call Session Control Function) composée de plusieurs serveurs, parmi lesquels :
- un serveur S-CSCF (Serving-Call Session Control Function), en charge en particulier de l'enregistrement des terminaux sur le coeur de réseau ; et
- un serveur P-CSCF (Proxy Call Session Control Function), jouant le rôle d'entité de raccordement des terminaux avec le coeur de réseau.

Ainsi, dans l'exemple illustré à la figure 1, le coeur de réseau CN comprend un serveur P-CSCF 3, point d'entrée du terminal 2 sur le coeur de réseau CN, et un serveur S-CSCF 4, chargé de l'enregistrement du terminal 2 auprès du coeur de réseau CN. Conformément au fonctionnement du coeur de réseau IMS CN, les requêtes d'enregistrement auprès du coeur de réseau CN émises par le terminal 2 transitent par le serveur P-CSCF 3 avant d'être acheminées pour traitement vers le serveur S-CSCF 4.

Comme mentionné précédemment, le standard 3GPP prévoit (requiert), selon le type de terminal et le type de carte SIM (Subscriber Identity Module) équipant le terminal (présence d'une carte USIM (Universal Subscriber Identity Module) ou ISIM (International Subscriber Identity Module)), lors de l'enregistrement d'un terminal auprès d'un coeur de réseau IMS (et donc auprès du coeur de réseau CN), l'établissement d'un tunnel sécurisé entre le terminal et l'entité de raccordement de ce terminal au coeur de réseau, autrement dit, entre le terminal et le serveur P-CSCF associé à ce terminal.

Par tunnel sécurisé établi entre deux entités (ex. un terminal et un serveur P-CSCF), on entend, de manière classique, un lien sécurisé établi entre les deux entités assurant, au moyen de clés adéquates, le chiffrement et/ou l'intégrité des données échangées entre ces deux entités.

L'invention propose avantageusement, afin de préserver les ressources du terminal et du serveur P-CSCF, de conditionner l'établissement de ce tunnel sécurisé en fonction au moins du réseau d'accès emprunté par le terminal.

Il convient de noter que l'invention ne se limite pas à une architecture de type IMS. Elle peut en effet s'appliquer à d'autres architectures de coeurs de réseau IP Multimédia prévoyant l'établissement d'un tunnel sécurisé lors de l'enregistrement d'un terminal, telles que notamment des architectures propriétaires.

Dans le premier mode de réalisation décrit ici, le conditionnement de l'établissement du tunnel sécurisé entre le terminal 2 et le serveur P-CSCF 3 est réalisé via une recommandation élaborée par le serveur S-CSCF 4. Le serveur S-CSCF 4 du coeur de réseau CN intègre ainsi d'une part les fonctionnalités d'un serveur S-CSCF tel que défini par le standard 3GPP, et d'autre part les caractéristiques d'un serveur du système 1 de communication conforme à l'invention.

Le serveur S-CSCF 4 dispose ici de l'architecture matérielle d'un ordinateur, telle qu'illustrée schématiquement à la **figure 2B****.**

Il comporte notamment un processeur 4A, une mémoire vive 4B, une mémoire morte 4C, une mémoire flash non volatile 4D ainsi que des moyens de communication 4E mettant en oeuvre notamment le protocole SIP. Ces moyens de communication lui permettent de communiquer avec les entités du coeur de réseau CN et avec le terminal 2.

La mémoire morte 4C du serveur S-CSCF 4 constitue un support d'enregistrement conforme à l'invention, lisible par le processeur 4A et sur lequel est enregistré un programme d'ordinateur conforme à l'invention, comportant des instructions pour l'exécution des étapes d'un procédé d'émission d'un message conforme à l'invention décrites ultérieurement en référence à la figure 3.

Par ailleurs, dans le premier mode de réalisation, la recommandation élaborée par le serveur S-CSCF 4 quant à l'établissement ou non du tunnel sécurisé entre le terminal 2 et le serveur P-CSCF 3 est relayée par le serveur P-CSCF 3 jusqu'au terminal 2. Ainsi, le serveur P-CSCF 3 intègre non seulement les fonctionnalités d'un serveur P-CSCF tel que défini par le standard 3GPP, mais également les caractéristiques d'une entité de raccordement conforme à l'invention.

Le serveur P-CSCF 3 dispose ici de l'architecture matérielle d'un ordinateur, telle qu'illustrée schématiquement à la **figure 2C****.**

Il comporte un processeur 3A, une mémoire vive 3B, une mémoire morte 3C, une mémoire flash non volatile 3D, ainsi que des moyens de communication 3E mettant en oeuvre notamment le protocole SIP. Ces moyens de communication 3E lui permettent de communiquer notamment avec le terminal 2 ainsi qu'avec les autres entités du coeur de réseau CN telles que le serveur S-CSCF 4.

La mémoire morte 3C du serveur P-CSCF 3 constitue un support d'enregistrement conforme à l'invention, lisible par le processeur 3A et sur lequel est enregistré un programme d'ordinateur conforme à l'invention, comportant des instructions pour l'exécution des étapes d'un procédé de transmission conforme à l'invention, décrites maintenant en référence à la figure 3.

Nous allons maintenant décrire, en référence **à la** **figure 3****,** les principales étapes d'un procédé d'enregistrement, d'un procédé de transmission et d'un procédé d'émission d'un message mises en oeuvre respectivement par le terminal 2, par le serveur P-CSCF 3 et par le serveur S-CSCF 4, dans le premier mode de réalisation.

Par souci de simplification, on se limite dans ce premier mode de réalisation, à une recommandation élaborée par le serveur S-CSCF 4 uniquement en fonction du réseau d'accès utilisé par le terminal 2 pour s'enregistrer auprès du coeur de réseau CN.

Cette hypothèse n'est toutefois pas limitative et d'autres paramètres peuvent être pris en compte, en plus du réseau d'accès utilisé par le terminal 2, pour élaborer une recommandation. Ces paramètres permettent avantageusement de pondérer la recommandation établie en fonction du réseau d'accès du terminal 2, comme mentionné ultérieurement dans la description.

On suppose que le terminal 2 souhaite s'enregistrer auprès du coeur de réseau CN, via le réseau d'accès AN, pour accéder par exemple à des services multimédia gérés par le coeur de réseau CN.

A cette fin, le terminal 2 émet, via ses moyens de communications 2E, une requête d'enregistrement REG1 à destination du coeur de réseau CN (étape E10). Dans le premier mode de réalisation décrit ici, cette requête d'enregistrement REG1 est une requête SIP REGISTER.

Un exemple d'une telle requête est donné en **annexe 1** (cf. exemple Ex. 1). Elle comprend notamment, de façon connue, un identifiant de l'utilisateur du terminal 2 dans les champs « From » et « To », ainsi qu'une information relative au réseau d'accès AN utilisé par le terminal 2 pour s'enregistrer auprès du coeur de réseau CN. Cette information se trouve dans le champ « P-Access-Network-Info » de la requête REG. Ainsi, dans l'exemple de l'annexe 1, AN est un réseau d'accès de type 3GPP-UTRAN-TDD.

La requête REG1 émise par le terminal 2 contient également des informations relatives à l'établissement d'un tunnel sécurisé avec le serveur P-CSCF 3 du coeur de réseau CN, conformément au standard 3GPP. Ces informations sont contenues dans le champ « Security-Client » de la requête d'enregistrement. Ainsi, le tunnel sécurisé proposé par le terminal sera de type IPsec pour une authentification IMS AKA, et de type TLS pour une authentification SIP digest avec TLS. Par exemple, dans l'exemple Ex. 1 de l'annexe 1, l'information « ipsec-3gpp » indique qu'il s'agit du protocole IPsec. Lesdites informations peuvent comprendre également les algorithmes de chiffrement et de contrôle d'intégrité envisagés (dans l'exemple Ex. 1, il s'agit des algorithmes connus « hmac-sha1-96 » et « des-ede3-cbc »), les ports sur lesquels le tunnel doit être monté, etc.

La requête d'enregistrement REG1 est reçue par le serveur P-CSCF 3 raccordant le terminal 2 au coeur de réseau CN (étape F10).

Sur réception de cette requête, le serveur P-CSCF 3 identifie quel réseau d'accès AN est utilisé par le terminal 2 pour s'enregistrer auprès du coeur de réseau CN (étape F20).

Il convient de noter que l'information de réseau d'accès, incluse par le terminal 2 dans sa requête d'enregistrement REG1, n'est pas nécessairement fiable, de sorte que le serveur P-CSCF 3 détermine ici par ses propres moyens quel réseau d'accès AN emprunte le terminal 2.

Il utilise à cette fin des techniques connues de l'homme du métier.

L'une de ces techniques consiste à établir lors d'une phase préliminaire, et à maintenir à jour, au niveau du serveur P-CSCF 3, une table de correspondance dans laquelle on associe à une plage d'adresses IP, un réseau d'accès. Ces adresses IP correspondent à des adresses IP de transport susceptibles d'être utilisées pour transporter les requêtes des terminaux cherchant à se connecter au coeur de réseau CN (et donc à s'enregistrer auprès du coeur de réseau CN). Il peut s'agir, selon les configurations de réseau envisagées, des adresses IP ou adresses de contact des terminaux cherchant à se connecter, ou des adresses IP d'entités intermédiaires entre ces terminaux et le serveur P-CSCF 3.

Une telle table peut être aisément établie par l'opérateur du coeur de réseau CN, pour chaque réseau d'accès connu de l'opérateur (à chaque nouvelle installation d'un réseau d'accès par exemple).

Ainsi, dans le premier mode de réalisation décrit ici, le serveur P-CSCF 3 détermine dans un premier temps, selon des moyens connus de l'homme du métier, l'adresse IP de transport de la requête d'enregistrement REG1 qu'il a reçue (c'est-à-dire l'adresse IP source de la requête REG1 telle que reçue par le serveur P-CSCF 3).

Puis, il compare cette adresse IP de transport aux plages d'adresses IP renseignées dans la table de correspondance. Il en déduit ainsi le réseau d'accès AN utilisé par le terminal 2 pour s'enregistrer (étape F20).

Le serveur P-CSCF 3 remplace si nécessaire, l'information contenue dans le champ « P-Access-Network-Info » de la requête d'enregistrement REG1, par le réseau AN obtenu à l'aide de l'adresse IP de transport de la requête REG1 (étape F30). L'information contenue dans le champ P-Access-Network-Info, suite à cette modification, est une information réseau certifiée par le serveur P-CSCF 3.

Le serveur P-CSCF 3 modifie également certains champs de la requête, de façon connue en soi, conformément au standard 3GPP. Ainsi, par exemple, il supprime de la requête le champ « Security-Client ».

La requête d'enregistrement du terminal modifiée par le serveur P-CSCF 3 est alors transmise à l'aide de ses moyens de communications 3E au serveur S-CSCF 4, sous la forme d'une requête REG2 (étape F40). La requête REG2 est, en dépit des modifications apportées à la requête REG1 reçue du terminal 2, une requête d'enregistrement du terminal 2 au sens de l'invention.

En Annexe 1, un exemple de requête REG2 dérivée de la requête REG1 donnée dans l'exemple Ex. 1 est fourni dans l'exemple Ex. 2.

Sur réception de la requête REG2 d'enregistrement du terminal 2 (étape G10), le serveur S-CSCF 4 identifie le réseau d'accès AN utilisé par le terminal 2 pour s'enregistrer, en consultant le champ « P-Access-Network-Info » de la requête, positionné par le serveur P-CSCF 3 (étape G20).

Puis il élabore, en fonction du réseau d'accès ainsi identifié, une recommandation RECO quant à l'établissement ou non du tunnel sécurisé entre le terminal 2 et le serveur P-CSCF 3 (étape G30). Cette recommandation traduit le caractère opportun (c'est-à-dire utile ou obligatoire) de l'établissement du tunnel sécurisé entre le terminal 2 et le serveur P-CSCF 3 de sorte à garantir la protection et l'intégrité des données échangées entre le terminal 2 et le coeur de réseau CN.

Cette recommandation est élaborée ici en prenant en compte un niveau de sécurisation des données associé par le coeur de réseau IP multimédia au réseau d'accès utilisé par le terminal.

A cette fin, dans le premier mode de réalisation décrit ici, le serveur S-CSCF 4 utilise une table (ou base de données) T préétablie, dans laquelle on associe à différents réseaux d'accès, une recommandation sur la nécessité ou non d'établir le tunnel de sécurité entre le terminal et l'entité de raccordement. La table T est par exemple stockée dans la mémoire non volatile 4D du serveur S-CSCF 4.

Cette table T est renseignée ici par l'opérateur du coeur de réseau CN, en fonction du niveau de sécurisation des échanges (ex. insuffisant ou faible *versus* suffisant ou fort) qu'il associe aux différents réseaux d'accès. Ainsi, si le niveau de sécurisation d'un réseau d'accès est considéré comme fort, une recommandation de ne pas établir de tunnel sécurisé est associée dans la table T à ce réseau d'accès. Inversement, si le niveau de sécurisation d'un réseau d'accès est considéré comme faible, une recommandation d'établir le tunnel sécurisé est associée dans la table T à ce réseau d'accès.

Le niveau de sécurisation d'un réseau d'accès peut être établi par l'opérateur en tenant compte notamment de la connaissance *a priori* des procédures de sécurité (chiffrement, contrôle de l'intégrité, etc.) mises en oeuvre sur ces différents réseaux d'accès (ex. en fonction du type de réseau d'accès et/ou de l'opérateur de ces réseaux, de la définition des standards respectés par ces réseaux d'accès), de l'existence ou non d'accords d'itinérance « forts » (fiables) avec les réseaux d'accès, voire de l'absence d'informations suffisantes sur les procédures de sécurisation mises en oeuvre par un réseau d'accès, etc.

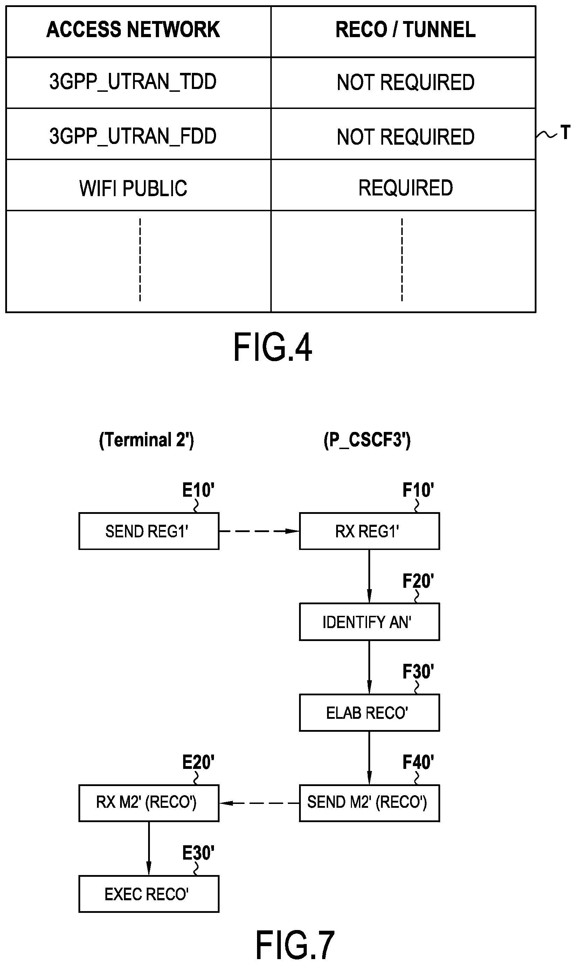

Un exemple d'une telle table T est illustré à la **figure 4****.** Dans cet exemple, on associe à un réseau d'accès 3GPP-UTRAN-TDD et à un réseau d'accès 3GPP-UTRAN-FDD, une recommandation de ne pas établir de tunnel sécurisé entre le terminal 2 et le serveur P-CSCF 3 (recommandation « Not required »), tandis qu'on associe à un réseau d'accès WiFi Public, une recommandation d'établir le tunnel sécurisé (recommandation « Required »). Autrement dit, on associe implicitement dans cette table un niveau de sécurisation fort aux réseaux d'accès 3GPP-UTRAN-TDD et 3GPP-UTRAN-FDD, et un niveau de sécurisation faible au réseau d'accès WiFi Public.

En variante, on peut envisager un autre type de recommandation, laissant libre choix au terminal 2 et/ou au serveur P-CSCF 3 d'établir ou non le tunnel sécurisé préconisé par le standard 3GPP.

Dans l'exemple illustré en Annexe 1, le réseau d'accès AN utilisé par le terminal 2 est un réseau d'accès de type 3GPP-UTRAN-TDD. Il est associé à une recommandation RECO de ne pas établir le tunnel sécurisé entre le terminal 2 et le serveur P-CSCF 3.

Le serveur S-CSCF 4 insère la recommandation RECO obtenue en consultant la table T à partir du réseau d'accès AN dans un message M1 à destination du terminal 2 (étape G40). Dans l'exemple décrit ici, le message M1 est un message SIP 401 Unauthorized de réponse intermédiaire à la requête d'enregistrement du terminal 2, qui transite par le serveur P-CSCF 3, conformément au protocole SIP.

Un exemple d'un tel message M1 contenant la recommandation RECO du serveur S-CSCF 4 est donné en Annexe 1 (cf. exemple Ex. 3). La recommandation est insérée dans cet exemple dans le header (champ) « Security-Server » (cf. l'Annexe H de la spécification TS 33.203) du message SIP M1, à l'aide d'un paramètre « tunnel » positionné à la valeur « not_required ».

Bien entendu, d'autres façons d'insérer cette recommandation dans le message SIP M1 peuvent être envisagées en variante, comme par exemple dans un autre champ du message SIP M1 (tel qu'un champ nouvellement créé pour les besoins de l'invention) ou dans un autre paramètre.

Le serveur P-CSCF 3 reçoit le message M1 contenant la recommandation RECO du serveur S-CSCF 4 quant à l'établissement du tunnel sécurisé avec le terminal 2 (étape F50).

Il transmet (i.e. propage) cette recommandation RECO au terminal 2 dans un message M2 dérivé du message M1 reçu du serveur S-CSCF 4 (étape F60). Le message M2 est donc également un message SIP 401 Unauthorized.

Dans le premier mode de réalisation décrit ici, le message M2 contient en outre des informations permettant l'établissement du tunnel sécurisé entre le terminal 2 et le serveur P-CSCF 3, indépendamment de la teneur de la recommandation RECO. De cette sorte, le serveur P-CSCF 3 s'assure que si le terminal 2 n'est pas capable d'exécuter la recommandation RECO, le tunnel sera établi en accord avec ces informations, et la protection des données échangées entre le terminal 2 et le coeur de réseau CN sera ainsi assurée.

Un exemple d'un message M2 contenant la recommandation RECO du serveur S-CSCF 4 est donné en Annexe 1 (cf. exemple Ex. 4). La recommandation est insérée dans cet exemple, dans le champ « Security-Server » du message SIP M2, sous la forme « tunnel=not_required », avec les informations permettant l'établissement du tunnel sécurisé (« ipsec-3gpp », « alg=hmac-sha1-96 », etc.).

Sur réception du message M2 (étape E20), le terminal 2 interprète et exécute la recommandation RECO contenue dans le message M2 (étape E30) : autrement dit ici, il n'établit pas de tunnel avec le serveur P-CSCF 3.

La recommandation élaborée par le serveur S-CSCF 4 permet donc de bloquer l'établissement du tunnel initialement prévu par le coeur de réseau CN, et ainsi de préserver les ressources du terminal 2 et du serveur P-CSCF 3.

L'enregistrement du terminal 2 auprès du coeur de réseau CN se poursuit ensuite de façon connue en soi.

Dans le premier mode de réalisation, la recommandation d'établir ou non le tunnel sécurisé entre le terminal 2 et son entité de raccordement au coeur de réseau CN (i.e. le serveur P-CSCF 3), est élaborée par le serveur S-CSCF 4.

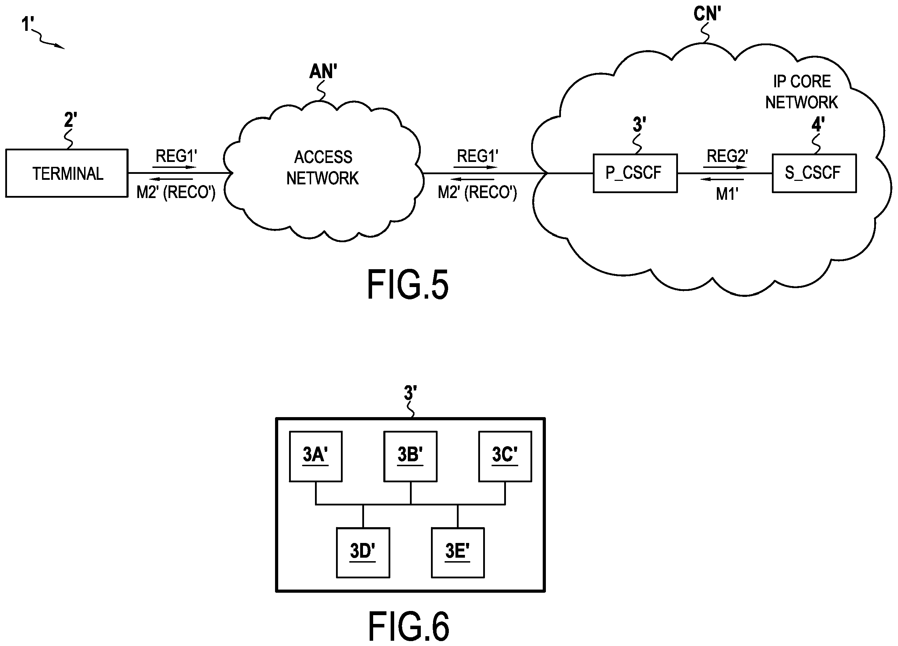

Nous allons maintenant décrire, en référence aux figures 5 à 7 et à l'annexe 2, un second mode de réalisation, dans lequel cette recommandation est élaborée par l'entité de raccordement même du terminal au coeur de réseau, autrement dit, dans une architecture de type IMS, par le serveur P-CSCF associé au terminal.

La **figure 5** représente, dans son environnement, un système 1' de communication conforme à l'invention, dans ce second mode de réalisation.

Le système 1' de communication comprend un terminal 2' conforme à l'invention, apte à s'enregistrer auprès d'un coeur CN' de réseau IP multimédia via un réseau d'accès AN'.

Comme précédemment pour le premier mode de réalisation, aucune limitation n'est attachée à la nature du terminal 2' ni au réseau d'accès AN' utilisé par le terminal 2' pour s'enregistrer et se connecter au coeur de réseau CN'.

Le terminal 2' dispose d'une architecture matérielle identique à celle du terminal 2, illustrée à la figure 2A décrite précédemment. Sa mémoire morte constitue un support d'enregistrement conforme à l'invention, lisible par le processeur du terminal 2' et sur lequel est enregistré un programme d'ordinateur conforme à l'invention, comportant des instructions pour l'exécution des étapes d'un procédé d'enregistrement auprès du coeur de réseau CN' conforme à l'invention, décrites ultérieurement en référence à la figure 7.

Le coeur de réseau CN' repose ici sur une architecture IMS et comprend un serveur P-CSCF 3', point d'entrée du terminal 2' sur le coeur de réseau CN', et un serveur S-CSCF 4', chargé de l'enregistrement du terminal 2' auprès du coeur de réseau CN'. Comme décrit précédemment pour le coeur de réseau CN et conformément au standard 3GPP, le coeur de réseau CN' requiert l'établissement d'un tunnel sécurisé entre le terminal 2' et l'entité de raccordement de ce terminal au coeur de réseau, autrement dit, entre le terminal 2' et le serveur P-CSCF 3' associé à ce terminal.

Le serveur P-CSCF 3' dispose ici de l'architecture matérielle d'un ordinateur, telle qu'illustrée schématiquement à la **figure 6****.**

Il comporte notamment un processeur 3A', une mémoire vive 3B', une mémoire morte 3C', une mémoire flash non volatile 3D' ainsi que des moyens de communication 3E' mettant en oeuvre notamment le protocole SIP. Ces moyens de communication lui permettent de communiquer avec les entités du coeur de réseau CN' et avec le terminal 2'.

La mémoire morte 3C' du serveur P-CSCF 3' constitue un support d'enregistrement conforme à l'invention, lisible par le processeur 3A' et sur lequel est enregistré un programme d'ordinateur conforme à l'invention, comportant des instructions pour l'exécution des étapes d'un procédé d'émission d'un message conforme à l'invention décrites maintenant en référence à la figure 7.

La **figure 7** illustre les principales étapes d'un procédé d'enregistrement et d'un procédé d'émission d'un message mises en oeuvre respectivement par le terminal 2' et par le serveur P-CSCF 3' dans le second mode de réalisation.

Il convient de noter que les étapes mises en oeuvre par le terminal 2' et représentées à la figure 7 sont identiques aux étapes mises en oeuvre par le terminal 2 et représentées à la figure 3 pour le premier mode de réalisation. Elles ne seront donc pas décrites en détail ici.

Par ailleurs, par souci de simplification, on se limite dans ce second mode de réalisation, à une recommandation élaborée par le serveur P-CSCF 3' uniquement en fonction du réseau d'accès utilisé par le terminal 2' pour s'enregistrer auprès du coeur de réseau CN'. Cette hypothèse n'est toutefois pas limitative et d'autres paramètres peuvent être pris en compte, en plus du réseau d'accès utilisé par le terminal 2', pour élaborer une recommandation, comme mentionné ultérieurement dans la description.

On suppose que le terminal 2' souhaite s'enregistrer auprès du coeur de réseau CN', via le réseau d'accès AN', pour accéder par exemple à des services multimédia gérés par le coeur de réseau CN'.

A cette fin, le terminal 2' émet, via ses moyens de communications 2E', une requête d'enregistrement REG1' à destination du coeur de réseau CN' (étape E10'). Cette requête d'enregistrement REG1' est une requête SIP REGISTER.

Un exemple d'une telle requête est donné en **Annexe 2** (cf. exemple Ex. 1). Elle comprend notamment un identifiant de l'utilisateur du terminal 2' dans les champs « From » et « To », ainsi qu'une information relative au réseau d'accès AN' utilisé par le terminal 2' pour s'enregistrer auprès du coeur de réseau CN'. Cette information se trouve dans le champ « P-Access-Network-Info » de la requête REG1'. Ainsi, dans l'exemple Ex. 1 de l'Annexe 2, AN' est un réseau d'accès de type 3GPP-UTRAN-TDD.

La requête REG1' émise par le terminal 2' contient également des informations relatives à l'établissement d'un tunnel sécurisé avec le serveur P-CSCF 3' du coeur de réseau CN', conformément au standard 3GPP, dans le champ « Security-Client » de la requête d'enregistrement. Ainsi, le tunnel sécurisé proposé par le terminal sera de type IPsec pour une authentification IMS AKA, et de type TLS pour une authentification SIP digest avec TLS. Par exemple, dans l'exemple Ex. 1 de l'annexe 2, l'information « ipsec-3gpp » indique qu'il s'agit du protocole IPsec. Lesdites informations peuvent comprendre également les algorithmes de chiffrement et de contrôle d'intégrité envisagés (dans l'exemple Ex. 1, il s'agit des algorithmes connus « hmac-sha1-96 » et « des-ede3-cbc »), les ports sur lesquels le tunnel doit être monté, etc.

La requête d'enregistrement REG1' est reçue par le serveur P-CSCF 3' raccordant le terminal 2' au coeur de réseau CN' (étape F10').

Sur réception de cette requête, le serveur P-CSCF 3' identifie quel réseau d'accès AN' est utilisé par le terminal 2' pour s'enregistrer auprès du coeur de réseau CN' (étape F20'). Il procède, à cette fin, de façon identique au serveur P-CSCF 3 lors de l'étape F20 du premier mode de réalisation, en utilisant l'adresse IP de transport de la requête REG1' qu'il a reçue.

Il remplace si nécessaire, l'information contenue dans le champ « P-Access-Network-Info » de la requête d'enregistrement REG1' reçue, par une information certifiée obtenue à partir de l'identification du réseau AN' déduite de l'adresse IP de transport de la requête REG1', puis transmet la requête d'enregistrement ainsi modifiée, sous la forme d'une requête REG2', au serveur S-CSCF 4' pour traitement.

Puis le serveur P-CSCF3' élabore, en fonction du réseau d'accès AN' identifié, une recommandation RECO' quant à l'établissement ou non du tunnel sécurisé avec le terminal 2' (étape F30'). Comme décrit précédemment, cette recommandation traduit le caractère opportun (c'est-à-dire utile ou obligatoire) de l'établissement du tunnel sécurisé entre le terminal 2' et le serveur P-CSCF 3' de sorte à garantir la protection et l'intégrité des données échangées entre le terminal 2' et le coeur de réseau CN'.

Cette recommandation est élaborée de façon identique à la recommandation RECO élaborée par le serveur S-CSCF 4 dans le premier mode de réalisation (cf. étape G30 décrite précédemment), en utilisant la table T, qui est, dans le second mode de réalisation, stockée dans la mémoire non volatile 3D' du serveur P-CSCF 3'.

Dans l'exemple illustré en Annexe 2, le réseau d'accès AN' utilisé par le terminal 2' est un réseau d'accès 3GPP-UTRAN-TDD. Il est associé, dans la table T, à une recommandation de ne pas établir le tunnel sécurisé entre le terminal 2' et le serveur P-CSCF 3'.

Le serveur P-CSCF 3' insère la recommandation RECO' obtenue en consultant la table T à partir du réseau d'accès AN', dans un message M2' qu'il envoie alors au terminal 2' (étape F40'). Ce message M2', dans lequel le serveur P-CSCF 3' insère la recommandation RECO', est dérivé du message M1' SIP 401 Unauthorized de réponse intermédiaire envoyé par le serveur S-CSCF 4' à destination du terminal 2' en réponse à la requête REG2' d'enregistrement du terminal 2', et qui transite, conformément au protocole SIP, par le serveur P-CSCF 3'.

Un exemple d'un tel message M2' contenant la recommandation RECO' du serveur P-CSCF 3' est donné en Annexe 2 (cf. exemple Ex. 2). La recommandation est insérée dans cet exemple dans un champ « Security-Server » du message SIP M2', dans un paramètre « tunnel » positionné à la valeur « not_required ».

Dans le second mode de réalisation décrit ici, le message M2' contient en outre des informations permettant l'établissement du tunnel sécurisé entre le terminal 2' et le serveur P-CSCF 3', indépendamment de la teneur de la recommandation RECO'. De cette sorte, le serveur P-CSCF 3' s'assure que si le terminal 2' n'est pas capable d'exécuter la recommandation RECO', le tunnel sera établi en accord avec ces informations, et la protection des données échangées entre le terminal 2' et le coeur de réseau CN' sera ainsi assurée.

Sur réception du message M2' (étape E20'), le terminal 2' interprète et exécute la recommandation RECO' contenue dans le message M2' (étape E30') : autrement dit, dans l'exemple considéré, il n'établit pas de tunnel avec le serveur P-CSCF 3'. L'enregistrement du terminal 2' auprès du coeur de réseau CN' se poursuit de façon connue en soi.

Dans les deux modes de réalisation décrit ici, les serveurs S-CSCF 4 et P-CSCF 3' utilisent pour élaborer leur recommandation, une table T préétablie associant à divers réseaux d'accès, une recommandation quant à l'établissement ou non d'un tunnel sécurisé entre le terminal et le serveur P-CSCF raccordant le terminal au coeur de réseau. Comme mentionné précédemment, cette table T prend en compte implicitement les niveaux de sécurisation associés par le coeur de réseau aux différents réseaux d'accès.

En variante, on peut envisager d'autres manières de prendre en compte les réseaux d'accès et leurs niveaux de sécurisation pour élaborer la recommandation.

Ainsi par exemple, la recommandation peut être élaborée sur réception de la requête d'enregistrement du terminal en comparant dynamiquement des caractéristiques et/ou le type du réseau d'accès utilisé par le terminal par rapport à des critères de sécurisation prédéterminés de sorte à associer dans un premier temps au réseau d'accès un niveau de sécurisation des données, puis à déterminer si le niveau de sécurisation assuré par le réseau d'accès est suffisant pour relâcher la contrainte d'établissement du tunnel sécurisé entre le terminal et l'entité de raccordement.

Par ailleurs, dans les deux modes de réalisation décrits ici, dans la table T, seul le type à proprement parler du réseau d'accès utilisé par le terminal pour s'enregistrer auprès du coeur de réseau est en définitive pris en compte. En variante, on peut envisager de prendre en compte d'autres caractéristiques du réseau d'accès, comme par exemple l'opérateur du réseau d'accès utilisé par le terminal (notamment pour déterminer s'il s'agit du même opérateur que celui du coeur de réseau ou d'un opérateur de confiance), ou d'autres informations relatives au réseau d'accès comme par exemple si le réseau utilisé par le terminal est son réseau nominal ou un réseau visité, ou si le réseau visité et utilisé par le terminal est le réseau du serveur élaborant la recommandation ou un autre réseau, etc.

Ainsi à titre d'exemple, on peut décider d'élaborer une recommandation d'établir un tunnel sécurisé si le réseau visité utilisé par le terminal est associé par le coeur de réseau à un niveau de sécurisation faible, et inversement, une recommandation de ne pas établir de tunnel sécurisé si le réseau visité est associé par le coeur de réseau à un niveau de sécurisation fort.

Ces caractéristiques ou informations peuvent être déduites par le serveur de la requête d'enregistrement du terminal ou de la signalisation associée à cette requête, par exemple à partir du champ P-Visited-Network-Id décrit dans le document RFC 3455 édité par l'IETF.

En outre, dans un autre mode de réalisation, on peut également envisager de prendre en compte pour élaborer la recommandation, en plus du réseau d'accès utilisé par le terminal, d'autres facteurs « discriminants » ayant une influence sur le niveau de sécurisation assuré par le réseau d'accès, tels que par exemple la localisation du terminal, son utilisateur, etc. A cette fin, on peut utiliser certains paramètres contenus dans des champs de la requête d'enregistrement du terminal ou reçus avec la requête d'enregistrement, notamment dans la signalisation associée à cette requête, comme par exemple l'adresse IP du terminal, l'adresse IP de transport de la requête d'enregistrement, l'identifiant de l'utilisateur du terminal ou encore les algorithmes de chiffrement demandés dans la requête d'enregistrement par le terminal (dans le champ Security Client), et renseigner la table T de sorte à ce qu'elle traduise différentes recommandations concernant l'établissement du tunnel sécurisé en fonction de ces paramètres également.

Ainsi par exemple, pour un réseau d'accès WIFI public, on peut envisager d'avoir une recommandation « Not required » pour une première plage d'adresses IP de transport de la requête et une recommandation « Required » pour une seconde plage d'adresses IP.

De façon similaire, pour un réseau d'accès de type 3GPP, on peut envisager d'avoir une recommandation « Not required » pour l'ensemble des utilisateurs des terminaux cherchant à s'enregistrer auprès du coeur de réseau, à l'exception de certains utilisateurs pour lesquels une recommandation « Required » sera élaborée. Ces utilisateurs peuvent être identifiés par le serveur selon l'invention, par exemple en consultant leur profil utilisateur stocké au niveau du serveur HSS (Home Subscriber Server) du coeur de réseau et dans lequel une indication appropriée aura été inscrite. En parallèle, une indication pourra être intégrée dans la table T spécifiant l'existence de tels utilisateurs pour laquelle la recommandation établie en fonction du type de réseau d'accès doit être pondérée en fonction de l'identifiant de l'utilisateur du terminal.

On notera que dans la description ci-dessus, on a privilégié le réseau d'accès utilisé par le terminal comme critère principal pour élaborer la recommandation d'établir ou non le tunnel sécurisé, et considérer éventuellement à titre complémentaire d'autres paramètres tels que l'identité de l'utilisateur du terminal cherchant à s'enregistrer. Toutefois, il est possible d'inverser cet ordre de priorité, voire de ne considérer que l'un de ces paramètres comme seul critère pour élaborer la recommandation d'établir ou non le tunnel sécurisé.

### ANNEXE 1

| **Ex. 1 : requête d'enregistrement REG1 du terminal 2 reçue par le serveur P-CSCF 3** |
|---|
| REGISTER sip:home.com SIP/2.0 |
| Via: SIP/2.0/UDP .... |
| P-Access-Network-Info: 3gpp-utran-TDD;utran-cell-id-3gpp=..... |
| From: <sip:bob@home.com>;tag=1234 |
| To: <sip:bob@home.com> |
| Contact: <sip:AoC_bob>;expires=3600 |
| Call-ID: 5678 |
| Authorization: Digest username="bob private@home.com", realm="home.com", nonce="", |
| uri="sip:home.com", response="" |
| Security-Client: ipsec-3gpp; alg=hmac-sha1-96; ealg=des-ede3-cbc; spi-c=2482; spi-s=2483; port-c=32045; |
| port-s=40375 |
| Require: sec-agree |
| Proxy-Require: sec-agree |
| Cseq: 1 REGISTER |
| Content-Length: 0 |

| **Ex. 2 : requête d'enregistrement REG2 du terminal 2 transmise par le serveur P-CSCF 3 et reçue par le serveur S-CSCF 4** |
|---|
| REGISTER sip:home.com SIP/2.0 |
| Via: SIP/2.0/UDP P-CSCF.... |
| Via: SIP/2.0/UDP .... |
| P-Access-Network-Info: 3gpp-utran-TDD;utran-cell-id-3gpp=..... |
| From: <sip:bob@home.com>;tag=1234 |
| To: <sip:bob@home.com> |
| Contact: <sip:AoC_bob>;expires=3600 |
| Call-ID: 5678 |
| Authorization: Digest username="bob private@home.com", realm="home.com", nonce="", uri="sip:home.com", response="" |
| Require: sec-agree |
| Proxy-Require: sec-agree |
| Cseq: 1 REGISTER |
| ... |
| Content-Length: 0 |

| **Ex. 3 : message M1 émis par le serveur S-CSCF 4 contenant une recommandation** |
|---|
| SIP/2.0 401 Unauthorized |
| Via: SIP/2.0/UDP P-CSCF.... |
| |
| Via: SIP/2.0/UDP .... |
| From: <sip:bob@home.com>;tag=1234 |
| To: <sip:bob@home.com>;tag=rem_9876 |
| Call-ID: 5678 |
| WWW-Authenticate: Digest realm="home.com", nonce=" V4pj+BE4T3J/CmetIDNW9p6hNnAQR0IDQeVyt5NQvhE=", algorithm=AKAv1-MD5 |
| Security-Server: **tunnel=not_required** |
| Cseq: 1 REGISTER |
| Content-Length: 0 |

| **Ex. 4 : message M2 transmis au terminal 2 par le serveur P-CSCF 3 contenant la recommandation du serveur S-CSCF 4** |
|---|
| SIP/2.0 401 Unauthorized |
| Via: SIP/2.0/UDP .... |
| From: <sip:bob@home.com>;tag=1234 |
| To: <sip:bob@home.com>;tag=rem_9876 |
| Call-ID: 5678 |
| WWW-Authenticate: Digest realm="home.com", nonce=" V4pj+BE4T3J/CmetIDNW9p6hNnAQR0IDQeVyt5NQvhE=", algorithm=AKAv1-MD5 |
| Security-Server: ipsec-3gpp; q=0.5; alg=hmac-sha1-96; ealg=des-ede3-cbc; spi-c=5142; spi-s=5143; |
| port-c=6045; port-s=6044;**tunnel=not_required** |
| Cseq: 1 REGISTER |
| Content-Length: 0 |

### ANNEXE 2

| **Ex. 1 : requête d'enregistrement REG1' du terminal 2' reçue par le serveur P-CSCF 3'** |
|---|
| REGISTER sip:home.com SIP/2.0 |
| Via: SIP/2.0/UDP .... |
| P-Access-Network-Info: 3gpp-utran-TDD;utran-cell-id-3gpp=..... |
| From: <sip:bob@home.com>;tag=1234 |
| To: <sip:bob@home.com> |
| Contact: <sip:AoC_bob>;expires=3600 |
| Call-ID: 5678 |
| Authorization: Digest username="bob private@home.com", realm="home.com", nonce="", uri="sip:home.com", response="" |
| Security-Client: ipsec-3gpp; alg=hmac-sha1-96; ealg=des-ede3-cbc; spi-c=2482; spi-s=2483; port-c=32045; |
| port-s=40375 |
| Require: sec-agree |
| Proxy-Require: sec-agree |
| Cseq: 1 REGISTER |
| Content-Length: 0 |

| **Ex. 2 : message M2' émis par le serveur P-CSCF 3' vers le terminal 2' contenant une recommandation** |
|---|
| SIP/2.0 401 Unauthorized |
| Via: SIP/2.0/UDP .... |
| From: <sip:bob@home.com>;tag=1234 |
| To: <sip:bob@home.com>;tag=rem_9876 |
| Call-ID: 5678 |
| WWW-Authenticate: Digest realm="home.com", nonce=" V4pj+BE4T3J/CmetIDNW9p6hNnAQR0IDQeVyt5NQvhE=", algorithm=AKAv1-MD5 |
| Security-Server: ipsec-3gpp; q=0.5; alg=hmac-sha1-96; ealg=des-ede3-cbc; spi-c=5142; spi-s=5143; |
| port-c=6045; port-s=6044;**tunnel=not_required** |
| Cseq: 1 REGISTER |
| Content-Length: 0 |

## Revendications

1. Procédé d'émission d'un message (M1,M1') par un serveur (4,3') d'un coeur de réseau IP multimédia (CN,CN') suite à la réception (G10,F10') par ledit serveur d'une requête d'enregistrement (REG2,REG1') d'un terminal (2,2') auprès du coeur de réseau, ladite requête d'enregistrement proposant une méthode d'authentification prévoyant l'établissement d'un tunnel sécurisé entre le terminal et une entité de raccordement (3,3') de ce terminal au coeur de réseau, ledit procédé d'émission comprenant :
- une étape d'identification (G20,F20') d'un réseau d'accès (AN,AN') utilisé par le terminal pour s'enregistrer auprès du coeur de réseau IP multimédia ;
- une étape d'élaboration (G30,F30'), en fonction du réseau d'accès identifié, d'une recommandation (RECO,RECO') quant à l'établissement ou non du tunnel sécurisé entre le terminal et l'entité de raccordement pour ladite méthode d'authentification ; et
- une étape d'insertion (G40,F40') de cette recommandation dans le message émis par le serveur.

2. Procédé selon la revendication 1 dans lequel la recommandation (RECO,RECO') est élaborée par le serveur en prenant en compte un niveau de sécurisation des données associé par le coeur de réseau au réseau d'accès.

3. Procédé selon la revendication 1 dans lequel :
- le coeur de réseau IP (CN) multimédia implémente une architecture IMS ;
- le serveur du coeur de réseau IP multimédia est un serveur S-CSCF (4) ; et
- le message (M1) dans lequel est insérée la recommandation (RECO) est émis par le serveur S-CSCF à destination du terminal via un serveur P-CSCF (3) raccordant le terminal (2) au coeur de réseau IP multimédia.

4. Procédé selon la revendication 1 dans lequel :
- le coeur de réseau IP (CN') multimédia implémente une architecture IMS ;
- le serveur du coeur de réseau IP multimédia est un serveur P-CSCF (3') ; et
- le message (M1') dans lequel est insérée la recommandation (RECO') est émis vers le terminal (2).

5. Procédé selon la revendication 1 dans lequel le message émis (M1,M1') est conforme au protocole SIP, et la recommandation est insérée dans un champ « Security Server » de ce message.

6. Procédé selon la revendication 1 dans lequel la recommandation est élaborée en fonction également d'au moins un paramètre reçu avec la requête d'enregistrement.

7. Procédé selon la revendication 6 dans lequel ledit au moins un paramètre comprend une adresse IP de transport de la requête d'enregistrement ou un identifiant associé à un utilisateur du terminal.

8. Procédé selon la revendication 1 dans lequel le message (M1') émis par le serveur contient en outre des informations permettant l'établissement du tunnel sécurisé entre le terminal et l'entité de raccordement de ce terminal au coeur de réseau IP multimédia.

9. Procédé selon la revendication 1 dans lequel la recommandation insérée dans le message comprend l'une des indications suivantes :
- une indication de ne pas établir le tunnel sécurisé entre le terminal et l'entité de raccordement ;
- une indication de libre choix quant à l'établissement du tunnel sécurisé entre le terminal et l'entité de raccordement ;
- une indication d'établir le tunnel sécurisé entre le terminal et l'entité de raccordement.

10. Procédé d'enregistrement d'un terminal (2,2') auprès d'un coeur de réseau IP (CN,CN'), ledit procédé comprenant :
- une étape d'émission (E10,E10), par le terminal, d'une requête d'enregistrement (REG1,REG1') auprès du coeur de réseau, via un réseau d'accès, ladite requête d'enregistrement proposant une méthode d'authentification prévoyant l'établissement d'un tunnel sécurisé entre le terminal et une entité de raccordement (3,3') de ce terminal au coeur de réseau ;
- une étape de réception (E20,E20'), par le terminal, en provenance du coeur de réseau, d'une recommandation (RECO,RECO') quant à l'établissement ou non du tunnel sécurisé entre le terminal et l'entité de raccordement pour ladite méthode d'authentification, cette recommandation provenant d'un message (M1,M1') émis par un serveur (4,3') du coeur de réseau conformément à un procédé d'émission selon la revendication 1, exécuté suite à la réception de la requête d'enregistrement du terminal ; et
- une étape d'interprétation (E30,E30') de cette recommandation par le terminal.

11. Procédé de transmission destiné à être mis en oeuvre par une entité de raccordement (3,3') d'un terminal (2,2') à un coeur de réseau IP multimédia (CN,CN'), ledit procédé de transmission comprenant :
- une étape de réception (F10) d'une requête d'enregistrement du terminal auprès du coeur de réseau, via un réseau d'accès, ladite requête d'enregistrement proposant une méthode d'authentification prévoyant l'établissement d'un tunnel sécurisé entre ledit terminal et ladite entité de raccordement ;
- une étape de transmission (F40) de cette requête d'enregistrement à un serveur (4,3') du coeur de réseau ;
- une étape de réception (F50), en provenance du serveur, d'un message contenant une recommandation quant à l'établissement ou non du tunnel sécurisé entre le terminal et l'entité de raccordement pour ladite méthode d'authentification, le message résultant de l'exécution par le serveur d'un procédé d'émission d'un message selon la revendication 1 ; et
- une étape de transmission (F60) de cette recommandation au terminal.

12. Programme d'ordinateur comportant des instructions pour l'exécution des étapes du procédé d'émission selon la revendication 1 ou du procédé d'enregistrement selon la revendication 10 ou du procédé de transmission selon la revendication 11, lorsque ledit programme est exécuté par un ordinateur.

13. Support d'informations lisible par un ordinateur, et comportant des instructions d'un programme d'ordinateur selon la revendication 12.

14. Serveur (4,3') d'un coeur de réseau IP multimédia (CN,CN'), ledit serveur comprenant des moyens activés suite à la réception par le serveur d'une requête d'enregistrement (REG2,REG1') d'un terminal (2,2') auprès du coeur de réseau, ladite requête d'enregistrement proposant une méthode d'authentification prévoyant l'établissement d'un tunnel sécurisé entre le terminal et une entité de raccordement (3,3') de ce terminal au coeur de réseau, lesdits moyens comprenant :
- des moyens d'identification d'un réseau d'accès (AN,AN') utilisé par le terminal pour s'enregistrer auprès du coeur de réseau ;
- des moyens d'élaboration (T), en fonction du réseau d'accès identifié, d'une recommandation quant à l'établissement ou non du tunnel sécurisé entre le terminal et l'entité de raccordement pour ladite méthode d'authentification ;
- des moyens d'insertion de cette recommandation dans un message (M1,M1'); et
- des moyens d'émission (4E,3E') du message.

15. Terminal (2,2') comprenant :
- des moyens d'émission (2E,2E') d'une requête d'enregistrement (REG1,REG1') auprès d'un coeur de réseau IP multimédia (CN,CN') via un réseau d'accès (AN,AN'), ladite requête d'enregistrement proposant une méthode d'authentification prévoyant l'établissement d'un tunnel sécurisé entre le terminal et une entité de raccordement (3,3') de ce terminal au coeur de réseau ;
- des moyens de réception (2E, 2E'), en provenance du coeur de réseau, d'une recommandation (RECO,RECO') quant à l'établissement ou non du tunnel sécurisé entre le terminal et l'entité de raccordement pour ladite méthode d'authentification, cette recommandation provenant d'un message (M1,M1) émis par un serveur (4,3') du coeur de réseau conforme à la revendication 14, suite à la réception de la requête d'enregistrement ; et
- des moyens d'interprétation (2A,2A') de cette recommandation.

16. Entité de raccordement (3) d'un terminal (2) à un coeur de réseau IP multimédia (CN), ladite entité de raccordement comprenant :
- des moyens de réception (3E) d'une requête d'enregistrement (REG1) auprès du coeur de réseau, via un réseau d'accès (AN), ladite requête d'enregistrement proposant une méthode d'authentification prévoyant l'établissement d'un tunnel sécurisé entre ledit terminal et ladite entité de raccordement ;
- des moyens de transmission (3E) de ladite requête d'enregistrement (REG2) à un serveur (4) conforme à la revendication 14 ;
- des moyens de réception (3E), en provenance du serveur, d'un message contenant une recommandation (RECO) quant à l'établissement ou non du tunnel sécurisé entre le terminal et l'entité de raccordement pour ladite méthode d'authentification ; et
- des moyens de transmission (3E) de cette recommandation audit terminal.

17. Système de communication (1,1') comprenant :
- un serveur (4,3') d'un coeur de réseau IP multimédia (CN,CN') conforme à la revendication 14 ;
- un terminal (2,2') selon la revendication 15 apte à s'enregistrer auprès du coeur de réseau multimédia en envoyant une requête d'enregistrement (REG1,REG1') audit coeur de réseau via un réseau d'accès (AN,AN') ; et
- une entité de raccordement (3) du terminal au coeur de réseau IP multimédia ;
ledit terminal étant apte à exécuter une recommandation élaborée par le serveur quant à l'établissement ou non d'un tunnel sécurisé entre le terminal et l'entité de raccordement du terminal au coeur de réseau.

## Patentansprüche

1. Verfahren zum Senden einer Nachricht (M1, M1') durch einen Server (4, 3') eines IP-Multimedia-Kernnetzes (CN, CN') im Anschluss an den Empfang (G10, F10'), durch den Server, einer Registrierungsanfrage (REG2, REG1') eines Endgerätes (2, 2') in dem Kernnetz, wobei die Registrierungsanfrage ein Authentifizierungsverfahren vorschlägt, das den Aufbau eines sicheren Tunnels zwischen dem Endgerät und einer Entität zum Anschluss (3, 3') dieses Endgerätes an das Kernnetz vorsieht, wobei das Verfahren zum Senden umfasst:
- einen Schritt der Identifizierung (G20, F20') eines Zugangsnetzes (AN, AN'), das von dem Endgerät verwendet wird, um sich in dem IP-Multimedia-Kernnetz zu registrieren;
- einen Schritt der Erstellung (G30, F30'), in Abhängigkeit von dem identifizierten Zugangsnetz, einer Empfehlung (RECO, RECO') hinsichtlich des Aufbaus oder Nicht-Aufbaus des sicheren Tunnels zwischen dem Endgerät und der Entität zum Anschluss für das Authentifizierungsverfahren; und
- einen Schritt des Einfügens (G40, F40') dieser Empfehlung in die vom Server gesendete Nachricht.

2. Verfahren nach Anspruch 1, wobei die Empfehlung (RECO, RECO') von dem Server unter Berücksichtigung eines Datensicherheitsniveaus erstellt wird, das dem Zugangsnetz durch das Kernnetz zugeordnet wird.

3. Verfahren nach Anspruch 1, wobei:
- das IP-Multimedia-Kernnetz (CN) eine IMS-Architektur implementiert;
- der Server des IP-Multimedia-Kernnetzes ein S-CSCF-Server (4) ist; und
- die Nachricht (M1), in welche die Empfehlung (RECO) eingefügt wird, von dem S-CSCF-Server an das Endgerät über einen P-CSCF-Server (3) gesendet wird, der das Endgerät (2) an das IP-Multimedia-Kernnetz anschließt.

4. Verfahren nach Anspruch 1, wobei:
- das IP-Multimedia-Kernnetz (CN') eine IMS-Architektur implementiert;
- der Server des IP-Multimedia-Kernnetzes ein P-CSCF-Server (3') ist; und
- die Nachricht (M1'), in welche die Empfehlung (RECO') eingefügt wird, an das Endgerät (2) gesendet wird.

5. Verfahren nach Anspruch 1, wobei die gesendete Nachricht (M1, M1') mit dem Protokoll SIP konform ist und die Empfehlung in ein Feld "Security Server" dieser Nachricht eingefügt wird.

6. Verfahren nach Anspruch 1, wobei die Empfehlung außerdem in Abhängigkeit von wenigstens einem Parameter erstellt wird, der mit der Registrierungsanfrage empfangen wird.

7. Verfahren nach Anspruch 6, wobei der wenigstens eine Parameter eine IP-Transportadresse der Registrierungsanfrage oder eine Kennung, die einem Benutzer des Endgerätes zugeordnet ist, umfasst.

8. Verfahren nach Anspruch 1, wobei die von dem Server gesendete Nachricht (M1') außerdem Informationen enthält, welche den Aufbau des sicheren Tunnels zwischen dem Endgerät und der Entität zum Anschluss dieses Endgerätes an das IP-Multimedia-Kernnetz ermöglichen.

9. Verfahren nach Anspruch 1, wobei die in die Nachricht eingefügte Empfehlung einen der folgenden Hinweise umfasst:
- einen Hinweis, den sicheren Tunnel zwischen dem Endgerät und der Entität zum Anschluss nicht aufzubauen;
- einen Hinweis auf die freie Wahl hinsichtlich des Aufbaus des sicheren Tunnels zwischen dem Endgerät und der Entität zum Anschluss;
- einen Hinweis, den sicheren Tunnel zwischen dem Endgerät und der Entität zum Anschluss aufzubauen.

10. Verfahren zur Registrierung eines Endgerätes (2, 2') in einem IP-Multimedia-Kernnetz (CN, CN'), wobei das Verfahren umfasst:
- einen Schritt des Sendens (E10, E10'), durch das Endgerät, einer Registrierungsanfrage (REG1, REG1') in dem Kernnetz über ein Zugangsnetz, wobei die Registrierungsanfrage ein Authentifizierungsverfahren vorschlägt, das den Aufbau eines sicheren Tunnels zwischen dem Endgerät und einer Entität zum Anschluss (3, 3') dieses Endgerätes an das Kernnetz vorsieht;
- einen Schritt des Empfangs (E20, E20') durch das Endgerät, einer von dem Kernnetz stammenden Empfehlung (RECO, RECO') hinsichtlich des Aufbaus oder Nicht-Aufbaus des sicheren Tunnels zwischen dem Endgerät und der Entität zum Anschluss für das Authentifizierungsverfahren, wobei diese Empfehlung aus einer Nachricht (M1, M1') stammt, die von einem Server (4, 3') des Kernnetzes gemäß einem Verfahren zum Senden nach Anspruch 1 gesendet wurde, das im Anschluss an den Empfang der Registrierungsanfrage des Endgerätes ausgeführt wird; und
- einen Schritt der Interpretation (E30, E30') dieser Empfehlung durch das Endgerät.

11. Übertragungsverfahren, welches dazu bestimmt ist, von einer Entität zum Anschluss (3, 3') eines Endgerätes (2, 2') an ein IP-Multimedia-Kernnetz (CN, CN') durchgeführt zu werden, wobei das Übertragungsverfahren umfasst:
- einen Schritt des Empfangs (F10) einer Registrierungsanfrage des Endgerätes in dem Kernnetz über ein Zugangsnetz, wobei die Registrierungsanfrage ein Authentifizierungsverfahren vorschlägt, das den Aufbau eines sicheren Tunnels zwischen dem Endgerät und der Entität zum Anschluss vorsieht;
- einen Schritt der Übertragung (F40) dieser Registrierungsanfrage zu einem Server (4, 3') des Kernnetzes;
- einen Schritt des Empfangs (F50) einer von dem Server stammenden Nachricht, die eine Empfehlung hinsichtlich des Aufbaus oder Nicht-Aufbaus des sicheren Tunnels zwischen dem Endgerät und der Entität zum Anschluss für das Authentifizierungsverfahren enthält, wobei die Nachricht aus der Ausführung, durch den Server, eines Verfahrens zum Senden einer Nachricht nach Anspruch 1 resultiert; und
- einen Schritt der Übertragung (F60) dieser Empfehlung zu dem Endgerät.

12. Computerprogramm, welches Anweisungen zur Ausführung der Schritte des Verfahrens zum Senden nach Anspruch 1 oder des Verfahrens zur Registrierung nach Anspruch 10 oder des Übertragungsverfahrens nach Anspruch 11, wenn das Programm von einem Computer ausgeführt wird, enthält.

13. Datenträger, der von einem Computer lesbar ist und Anweisungen eines Computerprogramms nach Anspruch 12 umfasst.

14. Server (4, 3') eines IP-Multimedia-Kernnetzes (CN, CN'), wobei der Server Mittel umfasst, die im Anschluss an den Empfang, durch den Server, einer Registrierungsanfrage (REG2, REG1') eines Endgerätes (2, 2') in dem Kernnetz aktiviert werden, wobei die Registrierungsanfrage ein Authentifizierungsverfahren vorschlägt, das den Aufbau eines sicheren Tunnels zwischen dem Endgerät und einer Entität zum Anschluss (3, 3') dieses Endgerätes an das Kernnetz vorsieht, wobei die Mittel umfassen:
- Mittel zur Identifizierung eines Zugangsnetzes (AN, AN'), das von dem Endgerät verwendet wird, um sich in dem Kernnetz zu registrieren;
- Mittel zur Erstellung (T), in Abhängigkeit von dem identifizierten Zugangsnetz, einer Empfehlung hinsichtlich des Aufbaus oder Nicht-Aufbaus des sicheren Tunnels zwischen dem Endgerät und der Entität zum Anschluss für das Authentifizierungsverfahren;
- Mittel zum Einfügen dieser Empfehlung in eine Nachricht (M1, M1'); und
- Mittel zum Senden (4E, 3E') der Nachricht.

15. Endgerät (2, 2'), welches umfasst:
- Mittel zum Senden (2E, 2E') einer Registrierungsanfrage (REG1, REG1') in einem IP-Multimedia-Kernnetz (CN, CN') über ein Zugangsnetz (AN, AN'), wobei die Registrierungsanfrage ein Authentifizierungsverfahren vorschlägt, das den Aufbau eines sicheren Tunnels zwischen dem Endgerät und einer Entität zum Anschluss (3, 3') dieses Endgerätes an das Kernnetz vorsieht;
- Mittel zum Empfang (2E, 2E') einer von dem Kernnetz stammenden Empfehlung (RECO, RECO') hinsichtlich des Aufbaus oder Nicht-Aufbaus des sicheren Tunnels zwischen dem Endgerät und der Entität zum Anschluss für das Authentifizierungsverfahren, wobei diese Empfehlung aus einer Nachricht (M1, M1') stammt, die von einem Server (4, 3') des Kernnetzes gemäß Anspruch 14 im Anschluss an den Empfang der Registrierungsanfrage gesendet wurde; und
- Mittel zur Interpretation (2A, 2A') dieser Empfehlung.

16. Entität zum Anschluss (3) eines Endgerätes (2) an ein IP-Multimedia-Kernnetz (CN), wobei die Entität zum Anschluss umfasst:
- Mittel zum Empfang (3E) einer Registrierungsanfrage (REG1) in dem Kernnetz über ein Zugangsnetz (AN), wobei die Registrierungsanfrage ein Authentifizierungsverfahren vorschlägt, das den Aufbau eines sicheren Tunnels zwischen dem Endgerät und der Entität zum Anschluss vorsieht;
- Mittel zur Übertragung (3E) der Registrierungsanfrage (REG2) zu einem Server (4) gemäß Anspruch 14;
- Mittel zum Empfang (3E) einer von dem Server stammenden Nachricht, die eine Empfehlung (RECO) hinsichtlich des Aufbaus oder Nicht-Aufbaus des sicheren Tunnels zwischen dem Endgerät und der Entität zum Anschluss für das Authentifizierungsverfahren enthält; und
- Mittel zur Übertragung (3E) dieser Empfehlung zu dem Endgerät.

17. Kommunikationssystem (1, 1'), welches umfasst:
- einen Server (4, 3') eines IP-Multimedia-Kernnetzes (CN, CN') gemäß Anspruch 14;
- ein Endgerät (2, 2') nach Anspruch 15, das in der Lage ist, sich in dem Multimedia-Kernnetz zu registrieren, indem es eine Registrierungsanfrage (REG1, REG1') über ein Zugangsnetz (AN, AN') an das Kernnetz sendet; und
- eine Entität zum Anschluss (3) des Endgerätes an das IP-Multimedia-Kernnetz;
wobei das Endgerät in der Lage ist, eine von dem Server erstellte Empfehlung hinsichtlich des Aufbaus oder Nicht-Aufbaus eines sicheren Tunnels zwischen dem Endgerät und der Entität zum Anschluss des Endgerätes an das Kernnetz auszuführen.

## Claims

1. Method for the transmission of a message (M1,M1') by a server (4,3') of a multimedia IP core network (CN,CN') following the reception (G10,F10') by said server of a request (REG2,REG1') from a terminal (2,2') to register with the core network, said registration request proposing an authentication method providing for the establishment of a secure tunnel between the terminal and an entity (3,3') for connecting this terminal to the core network, said transmission method comprising:
- a step (G20,F20') of identification of an access network (AN,AN') used by the terminal for registering with the multimedia IP core network;
- a step (G30,F30'), of formulation, according to the access network identified, of a recommendation (RECO,RECO') regarding the establishment or otherwise of the secure tunnel between the terminal and the connection entity for said authentication method; and
- a step (G40,F40') of insertion of this recommendation into the message transmitted by the server.

2. Method according to Claim 1, wherein the recommendation (RECO,RECO') is drafted by the server taking into account a level of data security that the core network associates with the access network.

3. Method according to Claim 1, wherein:
- the multimedia IP core network (CN) implements an IMS architecture;
- the server of the multimedia IP core network is an S-CSCF server (4) ; and
- the message (M1) into which the recommendation (RECO) is inserted is transmitted by the S-CSCF server to the terminal via a P-CSCF server (3) connecting the terminal (2) to the multimedia IP core network.

4. Method according to Claim 1, wherein:
- the multimedia IP core network (CN') implements an IMS architecture;
- the server of the multimedia IP core network is a P-CSCF server (3') ; and
- the message (M1') into which the recommendation (RECO') is inserted is transmitted to the terminal (2) .

5. Method according to Claim 1, wherein the transmitted message (M1,M1') complies with the SIP protocol, and the recommendation is inserted into a "Security Server" field of this message.

6. Method according to Claim 1, wherein the recommendation is also drafted according to at least one parameter received with the registration request.

7. Method according to Claim 6, wherein said at least one parameter comprises a transport IP address of the registration request or an identifier associated with a user of the terminal.

8. Method according to Claim 1, wherein the message (M1') transmitted by the server furthermore contains information allowing the establishment of the secure tunnel between the terminal and the entity for connecting this terminal to the multimedia IP core network.

9. Method according to Claim 1, wherein the recommendation inserted into the message comprises one of the following instructions:
- an instruction not to establish the secure tunnel between the terminal and the connection entity;
- an instruction of free choice regarding the establishment of the secure tunnel between the terminal and the connection entity;
- an instruction to establish the secure tunnel between the terminal and the connection entity.

10. Method for registering a terminal (2,2') with an IP core network (CN,CN'), said method comprising:
- a step (E10,E10') of transmission, by the terminal, of a request (REG1,REG1') to register with the core network, via an access network, said registration request proposing an authentication method providing for the establishment of a secure tunnel between the terminal and an entity (3,3') for connecting this terminal to the core network;
- a step (E20,E20') of reception, by the terminal, from the core network, of a recommendation (RECO,RECO') regarding the establishment or otherwise of the secure tunnel between the terminal and the connection entity for said authentication method, this recommendation originating from a message (M1,M1') transmitted by a server (4,3') of the core network in accordance with a transmission method according to Claim 1, executed following the reception of the registration request from the terminal; and
- a step (E30,E30') of interpretation of this recommendation by the terminal.

11. Transmission method intended to be implemented by an entity (3,3') for connecting a terminal (2,2') to a multimedia IP core network (CN,CN'), said transmission method comprising:
- a step (F10) of reception of a request from the terminal to register with the core network, via an access network, said registration request proposing an authentication method providing for the establishment of a secure tunnel between said terminal and said connection entity;
- a step (F40) of transmission of this registration request to a server (4,3') of the core network;
- a step (F50) of reception, from the server, of a message containing a recommendation regarding the establishment or otherwise of the secure tunnel between the terminal and the connection entity for said authentication method, the message resulting from the execution by the server of a method for transmitting a message according to Claim 1; and
- a step (F60) of transmission of this recommendation to the terminal.

12. Computer program including instructions for the execution of the steps of the transmission method according to Claim 1 or of the registration method according to Claim 10 or of the transmission method according to Claim 11, when said program is executed by a computer.

13. Computer-readable information storage medium including instructions of a computer program according to Claim 12.

14. Server (4,3') of a multimedia IP core network (CN,CN'), said server comprising means activated upon the reception, by the server, of a request (REG2,REG1') from a terminal (2,2') to register with the core network, said registration request proposing an authentication method providing for the establishment of a secure tunnel between the terminal and an entity (3,3') for connecting this terminal to the core network, said means comprising:
- means for identifying an access network (AN,AN') used by the terminal for registering with the core network;
- means (T) for drafting, according to the access network identified, a recommendation regarding the establishment or otherwise of the secure tunnel between the terminal and the connection entity for said authentication method;
- means for inserting this recommendation into a message (M1,M1') ; and
- means (4E,3E') for transmitting the message.

15. Terminal (2,2') comprising:
- means (2E,2E') for transmitting a request (REG1,REG1') to register with a multimedia IP core network (CN,CN') via an access network (AN,AN'), said registration request proposing an authentication method providing for the establishment of a secure tunnel between the terminal and an entity (3,3') for connecting this terminal to the core network;
- means (2E, 2E') for receiving, from the core network, a recommendation (RECO,RECO') regarding the establishment or otherwise of the secure tunnel between the terminal and the connection entity for said authentication method, this recommendation originating from a message (M1,M1') transmitted by a server (4,3') of the core network according to Claim 14, following the reception of the registration request; and
- means (2A,2A') for interpreting this recommendation.

16. Entity (3) for connecting a terminal (2) to a multimedia IP core network (CN), said connection entity comprising:
- means (3E) for receiving a request (REG1) to register with the core network, via an access network (AN), said registration request proposing an authentication method providing for the establishment of a secure tunnel between said terminal and said connection entity;
- means (3E) for transmitting said registration request (REG2) to a server (4) according to Claim 14;
- means (3E) for receiving, from the server, a message containing a recommendation (RECO) regarding the establishment or otherwise of the secure tunnel between the terminal and the connection entity for said authentication method; and
- means (3E) for transmitting this recommendation to said terminal.

17. Communication system (1,1') comprising:
- a server (4,3') of a multimedia IP core network (CN,CN') according to Claim 14;
- a terminal (2,2') according to Claim 15, capable of registering with the multimedia core network by sending a registration request (REG1,REG1') to said core network via an access network (AN,AN') ; and
- an entity (3) for connecting the terminal to the multimedia IP core network;
said terminal being capable of executing a recommendation drafted by the server regarding the establishment or otherwise of a secure tunnel between the terminal and the entity for connecting the terminal to the core network.
